(19) Europäisches Patentamt
European Patent Office
Office européen des brevets

(11) **EP 2 539 409 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(21) Anmeldenummer: **10798116.9**

(22) Anmeldetag: **27.12.2010**

(51) Int Cl.:
*C09D 183/08* (2006.01)    *C08K 3/22* (2006.01)
*C08K 3/36* (2006.01)    *C08G 77/22* (2006.01)

(86) Internationale Anmeldenummer:
**PCT/EP2010/070745**

(87) Internationale Veröffentlichungsnummer:
**WO 2011/103939 (01.09.2011 Gazette 2011/35)**

(54) **ZUSAMMENSETZUNGEN VON MIT OLIGOMEREN SILOXANOLEN FUNKTIONALISIERTEN METALLOXIDEN UND DEREN VERWENDUNG**

COMPOSITIONS OF METAL OXIDES FUNCTIONALISED BY OLIGOMER SILOXANOLS AND USE THEREOF

COMPOSITIONS À BASE D'OXYDES MÉTALLIQUES FONCTIONNALISÉS PAR DES SILOXANOLS OLIGOMÈRES ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2010 DE 102010002356**

(43) Veröffentlichungstag der Anmeldung:
**02.01.2013 Patentblatt 2013/01**

(73) Patentinhaber: **Evonik Degussa GmbH 45128 Essen (DE)**

(72) Erfinder:
• BORUP, Björn
  60385 Frankfurt (DE)
• ACHTZEHN, Mike
  88131 Lindau (DE)
• STANDKE, Burkhard
  79540 Lörrach (DE)
• WASSMER, Christian
  79688 Hausen (DE)

(56) Entgegenhaltungen:
WO-A1-02/094573    WO-A1-2005/003218
WO-A1-2007/019033    DE-A1-102007 040 802

## Beschreibung

Die Erfindung betrifft ein Verfahren zur Herstellung von wässrigen im Wesentlichen lösemittelfreien Zusammensetzungen basierend auf mit oligomeren Siloxanolen funktionalisierten pyrogenen Metalloxiden sowie die entsprechenden Zusammensetzungen, als auch deren Verwendung für den Korrosionsschutz und zur Haftvermittlung.

Dispersionen basierend auf der Umsetzung eines Glycidoxypropylalkoxysilans mit einem wässrigen Kieselsol sind aus der EP 1 773 958 A1 und der US 2008/0058489 bekannt. Diese Systeme werden als anorganische Bindemittel bei der Herstellung von Gussformen verwendet. Die DE 198 14 605 A1 offenbart ein Mittel enthaltend Glycidoxysilan und beispielsweise Lithiumpolysilikat. Die EP 1 288 245 A2 offenbart Zusammensetzungen aus der Umsetzung eines wässrigen Kieselsols mit Alkyltrialkoxysilanen und einem Alkoxysilan.

Nachteilig an der Zusammensetzung der DE 198 14 605 A1 ist die fehlende chemische Anbindung des Silans an die Oberfläche der Partikel in dem eingesetzten Kieselsol, d. h. der Ausbildung kovalenter Bindungen. Eine dauerhafte und unter stärkerer Beanspruchung beständige Vernetzung der Partikel mit dem Silan bleibt aufgrund der gebildeten nur auf Van der Waals Kräften und/oder Wasserstoffbrückenbindungen basierender Anhaftung aus. Einen dauerhaften Korrosionsschutz bieten die aus diesen Zusammensetzungen erzeugten Versiegelungen daher nicht. Eine chemische Anbindung der Silane auf die anorganischen Partikel verbessert die chemische Fixierung der Metalloxidpartikel auf einem aufgebrachten Untergrund, beispielsweise einem metallischen Substrat.

In den genannten Druckschriften werden Kieselsole offenbart, die ein bereits bestehendes kolloidales Siliziumdioxid, das aus Natriumsilikat gewonnen wird, enthält. Die wässrigen Dispersionen sind bei sauren oder basischen pH-Werten stabil und weisen Teilchengrößen von 20 bis 100 nm auf. Herstellungsbedingt sind die Silikapartikel runde Teilchen und weisen eine Reihe von Verunreinigungen, wie Fremdmetalle und Chloride, Sulfate oder andere anionische Bestandteile auf. Diese Fremdmetalle verunreinigen herstellungsbedingt die Kieselsole und können in der späteren Anwendung zu Problemen führen.

Aufgrund der deutlich geringeren, herstellbedingten Verunreinigungen von pyrogener Kieselsäure ist die Verwendung dieser in Beschichtungssystemen bevorzugt. Aus dem Stand der Technik sind silan- oder siloxanmodifizierte rein wässrige Metallbeschichtungsmittel von pyrogenen Kieselsäuren nicht bekannt. Dies kann darauf zurückzuführen sein, das die Stabilisierung wässriger Dispersionen von pyrogenen Kieselsäuren nur schwer gelingt, indem die Dispersionen auf hohe pH-Werte eingestellt oder mit Aluminiumverbindungen stabilisiert werden. Auch der hohe pH-Wert oder der Zusatz von Aluminiumverbindungen ist in vielen Anwendungen unerwünscht.

Eine Aufgabe bestand in der Bereitstellung von stabilen, rein wässrigen Zusammensetzungen basierend auf mit oligomeren Siloxanen funktionalisierten pyrogenen Metalloxiden. Diese Zusammensetzungen sollen verbesserte Anwendungseigenschaften, insbesondere bei der Verwendung und/oder nach der Aushärtung als die vorgenannten bekannten Systeme aufweisen. Ein besonderer Fokus war daher die Bereitstellung eines Verfahrens zur Herstellung dieser Zusammensetzungen mit chemisch funktionalisierten pyrogenen Metalloxiden, wie pyrogener Kieselsäure oder mit Metalloxiden modifizierten pyrogenen Kieselsäuren. Als chemische Funktionalisierung wird die Ausbildung von kovalenten Bindungen zwischen dem oligomeren Siloxanol und dem pyrogenen Metalloxid verstanden.

Gelöst werden die Aufgaben entsprechend den Angaben in den unabhängigen oder nebengeordneten Patentansprüchen. Bevorzugte Ausführungsformen sind in den Unteransprüchen und detailliert in der Beschreibung niedergelegt.

Überraschend wurde gefunden, dass eine rein wässrige Zusammensetzung, d. h. im wesentlichen frei von organischen Lösemitteln oder organischen Polymeren, enthaltend ein mit oligomeren Siloxanolen funktionalisiertes pyrogenes Metalloxid nach dem erfindungsgemäßen Verfahren erhältlich und insbesondere stabil ist. So sind die erfindungsgemäßen Zusammensetzungen über mindestens einen Monat bei Raumtemperatur stabil, bevorzugt über mindestens drei Monate, besonders bevorzugt 12 Monate, ganz besonders bevorzugt 24 Monate bei diesen Bedingungen.

Als stabil wird eine Zusammensetzung beurteilt, die über einen breiten pH-Bereich flüssig ist bzw. nach Aufrühren wieder flüssig ist, insbesondere auch bei pH-Werten unterhalb von 9. Insgesamt sind die erfindungsgemäßen Zusammensetzungen bei niedrigen pH-Werten zwischen 1 und 7 überraschend stabil. Bevorzugt weisen die Zusammensetzungen einen pH-Wert zwischen 2 bis 6 , besonders bevorzugt zwischen 3 und 5 auf. Gleichfalls können aber auch stabile Zusammensetzungen bei hohen pH-Werten bereitgestellt werden, wie vorzugsweise zwischen pH 7 bis 12, besonders bevorzugt zwischen 8 bis 11.

Überraschend konnte die Aufgabe mit einem Verfahren zur Herstellung einer Zusammensetzung enthaltend mit oligomeren Siloxanolen funktionalisierte pyrogene Metalloxide gelöst werden, indem in einer rein wässrigen Phase ein organofunktionelles, im Wesentlichen vollständig hydrolysiertes Siloxanol (i) mit mindestens einem pyrogenen Metalloxid (ii) intensiv gemischt wird.

Gegenstand der Erfindung ist somit ein Verfahren zur Herstellung einer Zusammensetzung enthaltend mit oligomeren Siloxanolen funktionalisierte pyrogene Metalloxide und Zusammensetzungen erhältlich nach diesem Verfahren, indem

(i) mindestens ein wässriges, im Wesentlichen vollständig hydrolysiertes, oligomeres, und organofunktionelles Siloxanol oder ein Gemisch von im Wesentlichen vollständig hydrolysierten, oligomeren und organofunktionellen Siloxanole das im Wesentlichen frei von organischen Lösemitteln ist, insbesondere im Wesentlichen frei von Alkoholen, frei von Polymeren basierend auf organischen Kohlenwasserstoffen, und

in denen jedes Silizium-Atom des Siloxanols mindestens eine funktionelle Gruppe trägt, und

- die funktionelle Gruppe gleich oder verschieden ist, insbesondere eine organofunktionelle Gruppe R in einem Strukturelement ist, und ausgewählt ist

a) zu 50 bis 100 %, insbesondere zu 80 bis 100 %, besonders bevorzugt 90 bis 100 % aus organofunktionellen Gruppen Aminoalkyl-, N-Alkylaminoalkyl-, Diaminoalkyl-, Triaminoalkyl-, bis-N-Aminoalkyl-, bis-N-Aminoalkylsilyl-, tris-N-Aminoalkyl-, tris-N-Aminoalkylsilyl-, Mercaptoalkyl-, Methacryl-, Methacryloxyalkyl-, Hydroxyalkyl-, Epoxyalkyl-, Glycidoxyalkyl-, hydrolysierte Glycidoxyalkyl-, Polysulfan-, Disulfan-, Thioether-, Polyether-, Vinyl-, Alkyl-, insbesondere mit 1 bis 50 C-Atomen, Alkenyl-, insbesondere mit 1 bis 8 C-Atomen, Alkinyl-, Aryl-, Alkylaryl-, Halogenalkyl-, Ureido-, Sulfanalkyl-, Cyanat-und/oder Isocyanat-Gruppen oder gegebenenfalls auch quartäre-Aminoalkyl-, wobei die organofunktionellen Gruppen linear, verzweigt und/oder cyclisch sind, und

b) zu 0 bis 50 %, insbesondere zu 0 bis 20, besonders bevorzugt 0 bis 10 % der Hydroxy-Gruppe, und die verbleibenden freien Valenzen der Silizium-Atome in den oligomeren Siloxanolen durch Hydroxygruppen gesättigt sind, insbesondere ergeben die Gruppen nach a) und b) in Summe 100 %, mit

(ii) mindestens einem pyrogenen Metalloxid ausgewählt aus der Gruppe Kieselsäure, Metalloxid modifizierte Kieselsäure und einem Metalloxid enthaltend mindestens ein Metall oder Halbmetall der zweiten bis sechsten Hauptgruppe und/oder der ersten bis achten Nebengruppe des Periodensystems der Elemente, wobei Metalloxide enthaltend Silizium, Aluminium, Zirkon, Titan, Eisen, Cer, Indium, Samarium, Zinn, Zink, Antimon, Arsen, Tantal, Rhodium, Ruthenium, Cobalt, Nickel, Kupfer, Silber, Germanium besonders bevorzugt sind, und/oder entsprechenden Mischoxiden oder damit modifizierten Metalloxiden intensiv gemischt wird, wobei das pyrogene Metalloxid als Metalloxidpulver zu den wässrigen, oligomeren Siloxanolen hinzugefügt wird und unter hohem Energieeintrag durch hohe Rühr- und/oder Mischgeschwindigkeiten mit den oligomeren Siloxanolen dispergiert wird, insbesondere dispergiert und/oder umgesetzt wird, d. h. das rein wässrige, oligomere Siloxanol unter Ausbildung kovalenter Bindungen mit einem pyrogenen Metalloxid reagiert,

- gegebenenfalls in Gegenwart eines Hydrolyse- und/oder Kondensationskatalysators, wie einer Säure, Base oder Metallsalz, insbesondere Metallfluoride oder organische Metallverbindungen, wie beispielsweise ein Metallalkoxid.

Die eingesetzten, insbesondere rein wässrigen, oligomeren Siloxanole können zudem Metallsäureester sowie hydrolysierte Metallsäureester und auch Metallsalze enthalten. Beispiele für solche Metallsäureester sind Alkyltitanate wie Butyltitanat, Propyltitanat, i-Propyltitanat oder entsprechende Zirkonate.

Besonders bevorzugt weisen die in dem Verfahren eingesetzten, insbesondere im wesentlichen rein wässrigen, oligomeren Siloxanole im Mittel einen Oligomerisierungsgrad von mindestens 4 auf, besonders bevorzugt weisen sie einen Oligomerisierungsgrad im Mittel von 4 bis 100000 auf, besonders bevorzugt 4 bis 50000. Die Molekulargewichtsbestimmung kann über Feldflussfraktionierung bestimmt werden. Die eingesetzten Siloxanole basieren erfindungsgemäß auf Hydrolyse- und/oder Homo-, Co-, Block-Co-Kondensate oder Gemischen der mit den vorstehend genannten organofunktionellen Gruppen substituierten Alkoxysilane und/oder von Tetraalkoxysilanen. Nur in vernachlässigbaren Umfang können verbleibende freie Valenzen der Silizium-Atome in den oligomeren Siloxanolen durch Hydroxygruppen und zu einem sehr geringen Anteil mit Alkoxygruppen gesättigt sein.

Die Nutzung von pyrogen hergestellten Kieselsäuren oder pyrogen hergestellter Metalloxide umfasst erfindungsgemäß Metalloxide und/oder Kieselsäuren, die in der Lage sind mit den oligomeren, hydroxyfunktionalisierten Silanen unter Ausbildung kovalenter Bindungen zu reagieren, insbesondere verfügen die Metalloxide über Hydroxygruppen. Bevorzugte Metalloxide sind ausgewählt aus den Oxiden der Metalle Silizium, Aluminium, Zirkon, Titan, Zinn, Cer, Indium, sowie auch Mischoxide der genannten Metalle. Des Weiteren, sind pyrogene Kieselsäuren oder Mischoxide mit Siliziumdioxid als auch pyrogene Kieselsäuren die schon während des Herstellungsprozesses mit Metalloxiden gedopt werden (wie z. B. in den Patenten EP 1216956 oder EP 850876 beschrieben), zu bevorzugen.

Besonders bevorzugte pyrogene Metalloxide sind $SiO_2$, $Al_2O_3$, $TiO_2$, $HfO_2$, $Y_2O_3$, $ZrO_2$, $Fe_2O_3$ $Nb_2O_5$ $V_2O_5$ $WO_3$ $SnO_2$, $GeO_2$, $B_2O_3$ $In_2O_3$, ZnO, CaO, Manganoxide, Bleioxide, MgO, BaO, SrO und/oder entsprechende Mischoxide oder damit modifizierte Metalloxide. Des Weiteren können auch pyrogene Metalloxide, wie sie beispielsweise aus den folgenden Dokumenten bekannt sind, in das erfindungsgemäße Verfahren eingesetzt werden. Auf den Offenbarungsgehalt der folgenden Dokumente wird vollständig Bezug genommen, deren Inhalt hiermit in diese Anmeldung mit aufgenommen wird: US 7,241,336, das ein Aluminium und Silizium enthaltendes Mischoxid offenbart, EP 1 284 277, das SiO2 umhüllte Oxide offenbart, EP 1 216 956, EP 1 236 773, US 6,627,173, EP 1 083 146, EP 1 048 617, EP 0 995 718 sowie EP 0 850 876, und EP 0 585 544.

Es hat sich überraschend herausgestellt, dass der Einsatz pyrogener Kieselsäure auch aus morphologischen Gründen einen deutlichen Vorteil gegenüber den wässrigen Kieselsolen aufweist. Die Gründe dafür liegen in der Morphologie der pyrogenen Kieselsäuren oder pyrogenen Metalloxide, denn sie weisen eine fraktale Struktur bzw. fraktale Morphologie auf, die sich aus den bei, der Flammgenese sehr kleinen in der Regel 2 bis 100 nm, aber auch 5 bis 10 nm große Primärteilchen bildet, insbesondere durch Agglomerieren oder Zusammenwachsen der Primärteilchen bzw. -partikel zu größeren Teilchen oder einem größeren Verbund.

Die aus den erfindungsgemäßen Zusammensetzungen und/oder funktionalisierten pyrogenen Metalloxiden erhaltenen Beschichtungen weisen durch diese unregelmäßige Partikelgeometrie/-morphologie gegenüber den runden Partikeln in den Kieselsolen, den Vorteil auf, dass die nächste Schicht auf der Beschichtung eine deutlich verbesserte Haftung als auf den bekannten Beschichtungen aufweist. Durch diese verbesserte Haftung wird die Unterwanderungsneigung vermindert und damit ein erhöhter Korrosionsschutz erzielt. Zudem weisen die hergestellten Zusammensetzungen funktionalisierter pyroger Metalloxide, insbesondere der pyrogenen Kieselsäure oder mit Metalloxiden modifizierte Kieselsäuren, die aggressiven Chloride nur mit einem Gehalt im Bereiche < 0,5 Gew.-% bis in den ppb Bereich auf, bspw. bis 1 ppb, vorzugsweise < 0,5 Gew.-%, bevorzugt < 0,3 Gew.-%, besonders bevorzugt < 0,1 Gew.-%, so dass auch unter diesem Aspekt die Verwendung von pyrogenen Metalloxiden zu verbesserten Korrosionsschutzbeschichtungen führt.

Bevorzugt in das Verfahren eingesetzte pyrogene Metalloxide, insbesondere Kieselsäuren oder mit Metalloxiden modifizierte Kieselsäure, haben Primärteilchen mit einen mittleren Partikeldurchmesser von weniger als 1 μm, insbesondere von ca. 50 bis 400 nm, besonders bevorzugt von 90 bis 200 nm (Median-Wert, Bestimmung durch statische Lichtstreuung). Ganz besonders bevorzugt können in das erfindungsgemäße Verfahren besonders kleine Primärteilchen, insbesondere als Agglomerate, eingesetzt werden, in denen die Primärteilchen des pyrogenen Metalloxids eine mittlere Partikelgröße ($d_{50}$) zwischen 2 bis 100 nm, insbesondere zwischen 10 bis 70 nm, bevorzugt zwischen 10 bis 60 nm aufweisen.

Das erfindungsgemäße Verfahren kann rein wässrig, insbesondere im Wesentlichen ohne Anwesenheit organischer Lösemittel, wie Alkohole, Harze oder von Präpolymeren von Harzen durchgeführt werden, wie Kunstharz oder Präpolymeren, wie Acrylat, Methacrylat, Epoxid, Polyurethan, ungesättigter Polyester. Als Alkohole und organische Lösemittel gelten die typischen Alkohole, insbesondere die Hydrolysealkohole, Glykole, Ether, Ester, Ketone, Aldehyde, wie insbesondere Ethanol, Methanol, Propanole (n-, iso-), Butanole (Isomere Butanole), 1-Methoxy-2-propanol, 1-Methoxypropanol, Amylalkohol, Polyether, Polyole, Acrylate, Harze, PU Acrylate, Styrolacrylat, Polyvinylalkohole, wässrige Epoxidharzdispersionen sowie alle weiteren, dem Fachmann bekannten Lösemittel. Ferner sind die in das Verfahren eingesetzten oligomeren Siloxanole bzw. die oligomeren Silane aus denen die Siloxanole abgeleitet sind im Wesentlichen vollständig hydrolysiert, so dass auch bei ihrer Umsetzung im Wesentlichen kein Hydrolysealkohol mehr freigesetzt werden kann.

Als im Wesentlichen vollständig hydrolysiert gilt ein oligomeres Siloxanol oder auch ein oligomeres Silan, wenn es im Wesentlichen keine hydrolysierbaren Alkoxygruppen mehr abspalten kann d. h. es wird auch beim Vernetzen im Wesentlichen kein Alkohol mehr freigesetzt. Besonders bevorzugt kann es frei von hydrolysierbaren Methoxy-, Ethoxy-, Propoxy- und/oder Butoxy-Gruppen sein, die flüchtige Alkohole bilden. Bevorzugt ist der Gehalt an Alkoxygruppen in den oligomeren Siloxanolen, insbesondere die zur Herstellung der Zusammensetzung genutzt werden, kleiner 10 bis 0 Gew.-%, insbesondere kleiner 5 bis 0 Gew.-%, bevorzugt kleiner 3 bis 0 Gew.-%, besonders bevorzugt kleiner 2 bis 0 Gew.-% und noch bevorzugter kleiner gleich 1 bis 0 Gew.-%, besser 0,5 bis 0 Gew.-% oder auch 0,1 bis 0 Gew.-% bezogen auf das Trockengewicht der oligomeren Siloxanole. Als im Wesentlichen frei von organischen Alkoholen, insbesondere frei von Lösemitteln, wird ein wässriges oligomeres Siloxanol angesehen, dessen Gehalt an Alkohol, insbesondere an Lösemittel kleiner 5 bis 0,0001 Gew.-% in Bezug auf die Gesamtzusammensetzung des wässrigen oligomeren Siloxanols aufweist, insbesondere bis zur Nachweisgrenze. Bevorzugt ist der Gehalt der Gesamtzusammensetzung kleiner 3 Gew.-% bis 0,0001 Gew.-%, besser bis zur Nachweisgrenze, besonders bevorzugt kleiner 1 Gew.-%, besonders bevorzugt kleiner 0,5 Gew.-%, wobei 0,1 Gew.-% besonders vorzugsweise eingesetzt werden. Das in dem Verfahren eingesetzte organofunktionelle, oligomere Siloxanol kann auch bereits seinerseits mit einem Kieselsol modifiziert worden sein. Als organofunktionelle Gruppe R, die unabhängig von einander gleich oder unterschiedlich sein kann wird bevorzugt auch eine organofunktionelle Gruppe R an einem der folgenden Strukturelemente verstanden. Zum besseren Verständnis kann das eingesetzte wässrige, oligomere Siloxanol auch aus kovalent über SiloxanBrücken (Si-O-Si) verbundenen Strukturelementen, insbesondere mit den Baugruppen M, D, T oder Q, gebildet werden. Erfindungsgemäß verfügt das wässrige oligomere Siloxanol über mindestens zwei der folgenden Strukturelemente ausgewählt aus: -O-Si(OH)(R)-; -O-Si(OH)$_2$(R), (-O-)$_2$(HO)SiR, (-O-)$_3$SiR, (-O-)$_2$Si(OH)$_2$, (-O-)$_3$Si(OH), (-O-)$_4$Si -O-Si(OH)$_2$-; -O-

Si(R)$_2$-; -O-Si(OH)(R)$_2$ und/oder (-O-)$_2$Si(R)$_2$, vorzugsweise mindestens -O-Si(OH)(R)-; -O-Si(OH)$_2$(R), und/oder (-O-)$_2$(HO)SiR, d. h. auch über mindestens eine Siloxanbindung Si-O-Si; -, und gegebenenfalls auch raumvernetzte Si-R mit bis zu drei Siloxan Si-O-Si-Bindungen, wobei R einer organofunktionellen Gruppe mit genannter Bedeutung entspricht, vorzugsweise weisen die oligomeren Siloxanole mindestens vier Strukturelemente auf, d. h. sie haben mindestens einen Oligomerisierungsgrad von 4, besonders bevorzugt weisen sie im Mittel 4 bis 100000 der Strukturelemente, besonders bevorzugt 4 bis 50000 Strukturelemente auf. Die Molekulargewichtsbestimmung kann über Feldflussfraktionierung bestimmt werden.

Bevorzugt sind alle Siliziumatome mindestens einfach und/oder zweifach mit organofunktionellen Gruppen, insbesondere mit der Gruppe R, substituiert, wobei die verbleibenden freien Valenzen der Silizium-Atome durch Hydroxygruppen oder eine Siloxan-Bindung abgesättigt sind. In Spuren können auch noch Alkoxygruppen vorliegen. Alternativ können Siliziumatome ein- bis zweifach mit organofunktionellen Gruppen R substituiert sein und andere Siliziumatome nur Hydroxy-Gruppen oder Siloxan-Bindungen aufweisen, beispielsweise (-O-)$_4$Si und/oder (-O-)$_2$Si(OH)$_2$. Beispiele dafür sind Oligomere aus der Reaktion von Fluoralkyltriethoxysilan und Tetraethoxysilan. Die beschriebenen oligomeren Silane weisen bevorzugt mindestens vier über Siloxanbrücken verbundene Siliziumatome auf.

Als besonders vorteilhaft hat sich die Zugabe des pyrogenen Metalloxids als Metalloxidpulver zu den wässrigen, oligomeren Siloxanolen bei gleichzeitigem, hohen Energieeintrag gezeigt, insbesondere indem das pyrogene Metalloxid durch hohe Rühr- und/oder Mischgeschwindigkeiten mit dem oligomeren Silan dispergiert wird. Erfindungsgemäß wird das pyrogene Metalloxid als Metalloxidpulver zu den wässrigen, oligomeren Siloxanolen hinzugefügt und unter hohem Energieeintrag durch hohe Rühr- und/oder Mischgeschwindigkeiten mit den oligomeren Siloxanolen dispergiert. Das Verfahren umfasst somit die folgenden Schritte (i) bestehend aus a) aus Vorlegen der wässrigen, oligomeren Siloxane, b) Zugabe der pyrogenen Metalloxide und c) Mischen ggf. in Gegenwart eines Hilfsmittels, Hydrolyse- und/oder Kondensationskatalysators, insbesondere werden die Schritte b) und c) im Wesentlichen gleichzeitig, iterativ oder unmittelbar nacheinander gegebenenfalls abwechselnd durchgeführt; und optional mindestens einem Schritt (ii) in dem die Zugabe weiterer Komponenten wie üblicher Hilfsmittel möglich ist, wie beispielsweise - aber nicht ausschließlich - Benetzungshilfsmittel, Basen, Säuren, Emulgatoren, Lackrohstoffen, Wasser, Lösemittel, Zusammensetzungen enthaltend diese und weiteren dem Fachmann bekannte Formulierungszusatzstoffe zur Herstellung von beispielsweise Metallvorbehandlungszusammensetzungen, Lacken, Farben, Haftmittelzusammensetzungen oder weiteren Formulierungen für zahlreiche Anwendungen. Erfindungsgemäß erfolgt das Dispergieren bei Rührgeschwindigkeiten oberhalb 1000 Umdrehungen pro Minute. Gegebenenfalls kann ein Hilfsmittel zugegen sein. Besonders bevorzugt erfolgt das Mischen und/oder die Umsetzung unter Zuführen hoher Scherkräfte. Das Mischen bzw. Dispergieren, insbesondere auch die Umsetzung, erfolgt vorzugsweise bei 1000 bis 10000 Umdrehungen/Minute, bevorzugt bei 1500 bis 9500 Umdrehungen/Minute, besonders bevorzugt bei 1500 bis 8500 Umdrehungen/Minute. Erfindungsgemäß kann die Umsetzung in Stufen erfolgen, insbesondere in zwei Stufen, wobei zunächst bei 1000 bis 3000 Umdrehungen/Minute dispergiert bzw. gemischt wird und anschließend bei 6000 bis 9000 Umdrehungen/Minute dispergiert bzw. gemischt wird. Geeignete Mischaggregate sind beispielsweise: Ultraturrax (Rotor Stator Dispergierer), Dissolver, Perlmühlen, Wet-Jet-Mill, ein- und mehrstufige Homogenisatoren. Die stufenweise Dispergierung kann je Stufe zwischen 1 Minute bis 10 Stunden erfolgen, bevorzugt 2 bis 60 Minuten, besonders bevorzugt 2 bis 15 Minuten, besser zwischen 5 bis 20 Minuten.

Durch das erfindungsgemäße Verfahren gelingt es, das pyrogene Metalloxid in überraschend hoher Konzentration in eine im Wesentlichen wässrige und im Wesentlichen lösemittelfreie und oligomere Siloxanole enthaltende Phase zu dispergieren. Bevorzugt besteht die Phase vor der Zugabe des pyrogenen Metalloxids aus oligomeren Siloxanen, Wasser und gegebenenfalls Hydrolyse-und/oder Kondensationskatalysatoren und einem Gehalt an Lösemittel von unter 0,5 Gew.-% bis zur Nachweisgrenze. Vorzugsweise können daher zwischen 0,001 bis 60 Gew.-% an pyrogenem Metalloxid in Bezug auf die Gesamtzusammensetzung dispergiert werden, insbesondere 0,01 bis 20 Gew.-%. Die Gehalte beziehen sich vorzugsweise auf eine rein wässrige, im Wesentlichen lösemittelfreie Zusammensetzung umfassend mit oligomeren Silanen funktionalisierte pyrogene Metalloxide.

In dem erfindungsgemäßen Verfahren wird vorzugsweise eine Viskosität zwischen 5 bis 8000 mPa·s, insbesondere zwischen 10 bis 4000 mPa·s, vorzugsweise zwischen 15 bis 1500 mPa·s oder besonders bevorzugt zwischen 20 bis 500 mPa·s eingestellt. Entsprechendes gilt für die Zusammensetzung. Die Bestimmung der Viskosität erfolgt in der Regel in Anlehnung an DIN 53015.

Die erfindungsgemäßen Zusammensetzungen zeichnen sich vorteilhaft durch eine niedrige Viskosität bei gleichzeitig hohem Feststoffgehalt aus, wie durch die Ausführungsbeispiele bzw. Figuren belegt wird. Diese Kombination von niedriger Viskosität und hohem Feststoffgehalt ist eine notwenige Voraussetzung für eine hohe Kapazität bei der Herstellung von Beschichtungen.

Erfindungsgemäß wird auch ein Verfahren zur Herstellung einer Zusammensetzung enthaltend funktionalisierte pyrogene Metalloxide sowie eine Zusammensetzung erhältlich nach dem erfindungsgemäßen Verfahren bereitgestellt, indem, insbesondere in einem ersten Schritt,

a) wässrige, im Wesentlichen lösemittelfreie, insbesondere alkoholfreie, und im Wesentlichen vollständig hydrolysierte oligomere, organofunktionelle Siloxanole,

- worin die Siloxanole bevorzugt in der wässrigen Phase gelöst, besonders bevorzugt vollständig in der wässrigen Phase gelöst sind, und insbesondere reaktive Hydroxygruppen, aufweisen; und

- die oligomeren Siloxanole mindestens zwei der folgenden Strukturelemente ausgewählt aus -O-Si(OH)(R)-; -O-Si(OH)$_2$(R), (-O-)$_2$(HO)SiR, (-O-)$_3$SiR, (-O-)$_2$Si(OH)$_2$, (-O-)$_3$Si(OH), (-O-)$_4$Si, -O-Si(OH)$_2$-; -O-Si(R)$_2$-; -O-Si(OH)(R)$_2$ und/oder (-O-)$_2$Si(R)$_2$ aufweisen, vorzugsweise mindestens -O-Si(OH)(R)-; -O-Si(OH)$_2$(R), und/oder (-O-)$_2$(HO)SiR, insbesondere weist mindestens ein Strukturelement, bevorzugt 4 bis 100000 der Strukturelemente mindestens eine reaktive Hydroxygruppe auf, und worin R in den Strukturelementen gleich oder verschieden ist und R eine organofunktionelle Gruppe ausgewählt aus Amino-, Aminoalkyl- , insbesondere N-Alkylaminoalkyl-, Diaminoalkyl-, Triaminoalkyl-, bis-N-Aminoalkyl-, bis-N-Aminoalkylsilyl-Gruppe, tris-N-Aminoalkyl-, tris-N-Aminoalkylsilyl-Gruppe, quartäre-Aminoalkyl-, Mercaptoalkyl-, Methacryl-, Methacryloxyalkyl-, Hydroxyalkyl-, insbesondere ein vicinales Dihydroxyalkyl-; Epoxyalkyl-, Glycidoxyalkyl-, hydrolysierte Glycidoxyalkyl-, Polysulfan-, Disulfan-, thioether-, Polyether-, Vinyl-, Alkyl-, Alkenyl-, Alkinyl-, Aryl-, Alkylaryl-, Halogenalkyl-, insbesondere Fluoralkyl-, Chloralkyl-, Bromalkyl-; Ureido-, Sulfanalkyl-, Cyanat- und/oder Isocyanat-Gruppen ist, wobei die organofunktionellen Gruppen linear, verzweigt und/oder cyclisch sind,

- und Siloxanole weisen im Mittel mindestens vier Strukturelemente auf, bevorzugt weisen sie im Mittel 4 bis 100000 der Struktureinheiten auf, besonders bevorzugt im Mittel 4 bis 50000,

- gegebenenfalls in Gegenwart von Hydrolyse- und/oder Kondensationskatalysatoren, hergestellt und/oder vorgelegt werden und

insbesondere in einem weiteren Schritt, mit

b) mindestens einem pyrogenen Metalloxid, welches insbesondere gegenüber hydrolysiertem oligomeren Siloxanol reaktive Funktionalitäten aufweist, bevorzugt mit pyrogener Kieselsäure, einer Metalloxid modifizierten Kieselsäure, wie sie vorstehend beschrieben sind gemischt und umgesetzt wird.

Zur Herstellung der oligomeren Siloxanole wird auf den Offenbarungsgehalt der nachstehend genannten Patentschriften, deren Inhalt hiermit in diese Anmeldung mit aufgenommen wird, vollständig Bezug genommen.

Der gegebenenfalls enthaltene Katalysator kann beispielsweise eine Säure sein und kann in der Regel aus der vorangehenden im Wesentlichen vollständigen Hydrolyse und partiellen Kondensation von Alkoxysilanen stammen, insbesondere von monomeren, oligomeren und/oder polymeren Alkoxysilanen, oder auch aus der Herstellung von im Wesentlichen vollständig hydrolysierten Homokondensaten und/oder Block-Co-Kondensaten. Der Katalysator kann üblicherweise Ameisensäure, Essigsäure oder Salpetersäure sein, aber auch andere dem Fachmann geläufige Säuren kommen hier in Betracht. Als Katalysator können zusätzlich oder alternativ auch andere übliche Katalysatoren, die eine Hydrolyse und/oder Kondensation der Siloxanole fördern, eingesetzt werden. Auch diese Katalysatoren sind dem zuständigen Fachmann geläufig. Dies können beispielsweise die vorgenannten Katalysatoren sein. Bevorzugt kann im erfindungsgemäßen Verfahren auf die Zugabe von Vernetzern, wie n-Propylzirkonat, Butyltitanat, Titanacetylacetonat verzichtet werden. Dies ist möglich, da bereits oligomere Verbindungen eingesetzt werden. Weiter ist es bevorzugt, wenn die Zusammensetzungen enthaltend das funktionalisierte Metalloxid im Wesentlichen frei von diesen Vernetzern sind, insbesondere wenn Glycidoxypropylalkoxysilane gegebenenfalls zusammen mit fluoralkylfunktionellen wasserlöslichen Siliziumverbindungen verwendet werden.

Als Hilfsmittel kann in dem Verfahren oder in die Zusammensetzung insbesondere ein Dispersionshilfsmittel, Rheologiehilfsmittel, Netzmittel z. B. Tenside eingesetzt werden. Vorzugsweise kann auf die Verwendung eines dieser Hilfsmittel im Verfahren oder auch in der erfindungsgemäßen Zusammensetzung verzichtet werden.

Als oligomere Siloxanole die gemäß der vorliegenden Erfindung in dem Verfahren eingesetzt werden, werden Siloxanole verstanden, insbesondere mit mindestens zwei der genannten Strukturelemente oder auch Polysiloxanole mit diesen Strukturelementen, die über eine reaktive Hydroxygruppe an mindestens einem Siliziumatom verfügen, und über organofunktionelle Gruppen, insbesondere als R in den Strukturelementen, verfügen, insbesondere ist die funktionelle Gruppe gleich oder verschieden und ausgewählt aus Aminoalkyl-, N-Alkylaminoalkyl-, Diaminoalkyl-, Triaminoalkyl-, bis-N-Aminoalkyl-, bis-N-Aminoalkylsilyl-, tris-N-Aminoalkyl-, tris-N-Aminoalkylsilyl-, Mercaptoalkyl-, Methacryl-, Methacryloxyalkyl-, Hydroxyalkyl-, Epoxyalkyl-, Glycidoxyalkyl-, hydrolysierte Glycidoxyalkyl-, Polysulfan-, Disulfan-, Thioether-, Polyether-, Vinyl-, Alkyl-, Alkenyl-, Alkinyl-, Aryl-, Alkylaryl-, Halogenalkyl-, Ureido-, Sulfanalkyl-, Cyanat- und/oder Isocyanat-Gruppen, wobei die organofunktionellen Gruppen linear, verzweigt und/oder cyclisch sind. Die eingesetzten oligomeren Silane weisen vorzugsweise die vorstehend genannten Oligomerisierungsgrade auf. Als organofunktionelle Gruppen, insbesondere als organofunktionelle Gruppe R an einem Strukturelement als R- oder R-Si oder (R)$_2$Si, kommen insbesondere in Betracht:

Beispiele für bevorzugte Aminoalkyl-Gruppen als organofunktionelle Gruppe, insbesondere als R in Strukturelementen, können aus den folgenden Aminoalkyl-Gruppen ausgewählt sein (alle Indices entsprechen ganzen Zahlen):

$$R^1{}_{h*}NH_{(2-h*)}[(CH_2)_h(NH)]_j\ [(CH_2)_l(NH)]_n\ \text{-}(CH_2)_k\text{-} \text{ der Formel} \qquad (I)$$

worin $0 \leq h \leq 6$; $h* = 0$, 1 oder 2; $j = 0$, 1 oder 2; $0 \leq l \leq 6$; $n = 0$, 1 oder 2;
$0 \leq k \leq 6$ und $R^1$ einem Benzyl-, Aryl-, Vinyl-, Formyl-Rest und/oder einem linearen, verzweigten und/oder cyclischen Alkyl-Rest mit 1 bis 8 C-Atomen entsprechen, und/oder

$$[NH_2(CH_2)_m]_2N(CH_2)_p\text{- der Formel} \qquad (II),$$

wobei $0 \leq m \leq 6$ und $0 \leq p \leq 6$ sind. Bevorzugt sind in Formel (I) $k = 3$, $n = 1$ oder 2, $l = 1,2$ oder 3 und $j = 0$, besonders bevorzugt sind $k = 3$, $n = 1$ oder 2, $l = 2$ und $j = 0$; $m = 2$ und $p = 3$ für eine N,N-Di(2-aminoethyl)-3-aminopropyl-Gruppe als R in einem Strukturelement. Weitere Beispiele für bevorzugte Aminoalkyl-Gruppen als organofunktionelle Gruppe R in Strukturelementen sind: Aminopropyl-, $H_2N(CH_2)_3$-, Diaminoethylen-3-propyl-, $H_2N(CH_2)_2NH(CH_2)_3$-; Triaminodiethylen-3-propyl-, $H_2N(CH_2)_2NH(CH_2)_2NH(CH_2)_3$-, 2-Aminoethyl-, 1-Aminomethyl-, (2-Aminoethylamino)-ethyl-, 6-Amino-n-hexyl-, sowie insbesondere 3-Amino-n-propyl-, 1-Aminomethyl-, N-Butyl-3-aminopropyl-, N-Butyl-1-amino-methyl-.

Auch organofunktionelle Gruppen, wie Bis(monosilylalkyl)amin-Gruppen, insbesondere als R in Strukturelementen, können bevorzugt sein:

$$\text{-}(CH_2)_i\ \text{-}[NH(CH_2)_f]_gNH[(CH_2)_{f*}NH]_{g*}\text{-}(CH_2)_{i*}\text{-}Si \text{ der Formel (III)},$$ worin $i$, $i*$, $f$, $f*$, $g$ oder $g*$ gleich oder verschieden sind, mit $i$ und/oder $i* = 0$ bis 8, $f$ und/oder $f* = 1$, 2 oder 3, $g$ und/oder $g* = 0$, 1 oder 2, wobei $i$ und/oder $i*$, insbesondere eine der Zahlen 1, 2, 3 oder 4, bevorzugt 3, entspricht, besonders bevorzugt ist $i$, $i* = 3$ und $g$, $g* = 0$. Beispiele dafür sind $\text{-}(CH_2)_3NH(CH_2)_3$-Si, $\text{-}(CH_2)_3NH(CH_2)_3$-Si, $\text{-}(CH_2)_3NH(CH_2)_2NH(CH_2)_3$-Si, $\text{-}(CH_2)_3NH(CH_2)_2NH(CH_2)_2NH(CH_2)_3$-Si, wobei Bis(propyl)amin-Si besonders bevorzugt sein kann. Dabei können die verbleibenden freien Valenzen des Si der Formel (III) mit Hydroxy-, und/oder Siloxan-Gruppen, insbesondere von -O-Si verbrückten Siloxanen, und optional mit einem Alkyl-Rest mit 1 bis 24 C-Atomen abgesättigt sein. Abgeleitet sind die Bis(monosilylalkyl)aminGruppen enthaltenden oligomeren Silane aus der Umsetzung von beispielsweise einem Bis(triethoxysilan)amin und/oder Bis(trimethoxysilan)amin und gegebenenfalls weitere der vorstehend genannten organofunktionellen Gruppen aufweisenden Silane, wie Alkyl-Gruppen funktionalisierte Silane. Nach Hydrolyse und Kondensation wird das vorhandene Lösemittel im Wesentlichen vollständig entfernt.

Quartäre-aminoalkylfunktionelle Gruppen, quartäre-aminofunktionelle Gruppen enthaltende Strukturelemente oder Siloxanole können beispielhaft aber nicht ausschließlich erhalten werden aus der Umsetzung mindestens eines halogenalkylfunktionellen Restes an einem Silan der Formel VIII und/oder gegebenenfalls dessen Hydrolyse- und/oder Kondensationsprodukte, d. h. einschließlich möglicher Homo-, Co-, Block- bzw. Block-Co-Kondensate,

$$\text{-}(R^6)_{n**}CH_2Hal \qquad (VIII),$$

worin die Gruppen $R^6$ gleich oder verschieden sind und eine lineare, verzweigte oder cyclische Alkylengruppe mit 1 bis 18 C-Atomen, d. h. eine bivalente Alkylgruppe mit 1 bis 18 C-Atomen, darstellt, dabei kann die Alkylengruppe substituiert sein oder olefinische C-C-Verknüpfungen enthalten, vorzugsweise $\text{-}CH_2$-, $\text{-}(CH_2)_2$-,$\text{-}CH_2CH(CH_3)$-, $n**$ gleich 0 oder 1 ist und Hal für Chlor oder Brom steht, und mit einem tertiären Amin der allgemeinen Formel IX in Gegenwart bzw. unter Zusatz einer definierten Menge Wasser umgesetzt wird,

$$N(R^7)_3 \qquad (IX),$$

worin die Gruppen $R^7$ gleich oder verschieden sind und $R^7$ für eine Gruppe $(R*O)_{3-x-y}(R**)_xSi[(R^6)_{n**}CH_2\text{-}]_{1+y}$, wobei $R^6$ und $n**$ die vorgenannte Bedeutung haben, und $R*$ gleich oder verschieden sind und $R*$ für ein Wasserstoff, eine lineare, verzweigte oder cyclische Alkyl-Gruppe mit 1 bis 8 C-Atomen, eine Aryl-, Arylalkyl-oder Acyl-Gruppe steht, die Gruppen $R**$ gleich oder verschieden sind und $R**$ für eine lineare, verzweigte oder cyclische Alkyl-Gruppe mit 1 bis 8 C-Atomen, eine Aryl-, Arylalkyl- oder Acyl-Gruppe steht, und $x$ gleich 0, 1 oder 2, $y$ gleich 0,1 oder 2 und $(x + y)$ gleich 0, 1 oder 2 sind, oder $R^7$ für eine lineare, verzweigte oder cyclische Alkylgruppe mit 1 bis 30 C-Atomen steht, die darüber hinaus substituiert sein kann, vorzugsweise mit mindestens einer Gruppe aus der Reihe $\text{-}N(R^8)_2$, wobei Gruppen $R^8$ gleich oder verschieden sind und $R^8$ für ein Wasserstoff, eine lineare, verzweigte oder cyclische Alkyl-Gruppe mit 1 bis 8 C-Atomen, eine Aminoalkylgruppe oder $(R^*0)_{3-x-y}(R^{**})_x Si[(R^6)_{n^{**}}CH_2-]_{1+y}$ steht, oder für $-SR^8$, wobei Gruppen $R^8$ gleich oder verschieden sind und $R^8$ für eine Wasserstoff, eine lineare, verzweigte oder cyclische Alkyl-Gruppe mit 1 bis 8 C-Atomen oder $(R^*0)_{3-x-y}(R^{**})_x Si[(R^6)_{n^{**}}CH_2-]_{1+y}$ oder gegebenenfalls dessen Hydrolyse- und/oder Kondensationsprodukte steht, $-OR$ oder $(R^*0)_{3-x}(R^{**})_x Si[(R^6)_{n^{**}}CH_2-]$ oder gegebenenfalls dessen Hydrolyse- und/oder Kondensationsprodukte, wobei die Gruppen $R^*$, $R^{**}$, $R^6$, x und $n^{**}$ unabhängig die bereits vorstehend genannte Bedeutung haben, wobei gegebenenfalls zwei Gruppen $R^7$ ihrerseits miteinander verknüpft sind und mit dem Stickstoff des tertiären Amins einen Cyclus bilden, und der gebildete Hydrolysealkohol zumindest teilweise, bevorzugt im Wesentlichen vollständig, entfernt wird. Ein besonders bevorzugtes quartäres oligomeres Siloxanol kann aus der Umsetzung von 3-Chlorpropyltriethoxysilan (CPTEO) mit Tetramethylethylendiamin (TMEDA) gegebenenfalls in Gegenwart weiterer Silane oder deren Kondensationsprodukten sowie anschließender Entfernung des Hydrolysealkohols erhalten werden und zweckmäßig in dem Verfahren eingesetzt werden.

Beispiele für bevorzugte Alkyl-Gruppen als organofunktionelle Gruppe, insbesondere als R in Strukturelementen, können lineare, verzweigte und/oder cylische Alkyl-Gruppen sein, wie n-Propyl-, iso-Propyl-, Ethyl-, Methyl-, n-Octyl-, Isobutyl-, Octyl-, Cyclohexyl-und/oder Hexadecyl-Gruppen.

Beispiele für bevorzugte Epoxy- und/oder Hydroxyalkyl-Gruppen als organofunktionelle Gruppe, insbesondere als R in Strukturelementen, können Glycidoxyalkyl-, 3-Glycidoxypropyl-, Epoxyalkyl- und/oder Epoxycycloalkyl-Gruppen sein. Bevorzugt können insbesondere Glycidyloxyalkyl, Epoxycyclohexyl sein.

Beispiele für bevorzugte Halogenalkyl-Gruppen als organofunktionelle Gruppe, insbesondere als R in Strukturelementen, können aus der Formel (IV) $R^2$-$Y_{m^*}$-$(CH_2)_s$-abgeleitet sein, wobei $R^2$ einem mono-, oligo- oder perfluorierten Alkyl-Rest mit 1 bis 9 C-Atomen oder einem mono-, oligo- oder perfluorierten Aryl-Rest, und wobei ferner Y einem $CH_2$-, O-, Aryl- oder S-Rest entspricht und $m^* = 0$ oder 1 und $s = 0$ oder 2 ist. Besonders bevorzugt kann die Halogenalkyl-Gruppe eine Fluoralkyl-Gruppe, wie vorzugsweise eine $F_3C(CF_2)_r(CH_2)_s$-Gruppe sein, wobei r eine ganze Zahl von 0 bis 9 darstellt, s gleich 0 oder 2 ist, besonders bevorzugt ist r gleich 5 und s gleich 2, $CF_3(CF_2)_5(CH_2)_2$- oder eine $CF_3(C_6H_4)$- oder eine $C_6F_5$-Gruppe. Bevorzugte organofunktionelle Gruppen R können sein: Tridecafluor-1,1,2,2-tetrahydrooctyl-1-, 3,3,3-Trifluorpropyl-, 3,3,3,2,2-Pentafluorpropyl-, 3,3,3-Trifluorpropyloxyethyl-, 3,3,3-Trifluorpropylmerkaptoethyl-, Tridecafluor-1,1,2,2-tetrahydrooctyl-.

Gemäß einer zweckmäßigen Ausführungsform kann die organofunktionelle Gruppe bzw. R einem Bis-Sulfanalkyl-Rest der allgemeinen Formel V mit $-(CH_2)_q$-X-$(CH_2)_q$-Si Silylgruppe entsprechen, wobei q = 1, 2 oder 3, X = Sp, wobei p im Mittel 2 bzw. 2,18 oder im Mittel 4 bzw. 3,8 mit einer Verteilung von 2 bis 12 Schwefelatomen in der Kette entspricht. Bevorzugte Gruppen R können Bis(propyl)disulfan-Silylgruppen hergestellt aus (Si 266), Bis(methyl)disulfan-Silylgruppen und/oder Bis(propyl)tetrasulfan-Silylgruppen hergestellt aus (Si 69) sein.

Beispielhafte wässrige, oligomere Siloxanole, abgeleitet aus Tris(alkoxysilylalkyl)-aminen, wie Tris(triethoxysilan)amin bzw. Tris(trimethoxysilan)amin, weisen ein trissilyliertes Amin-Strukturelement, abgeleitet aus der allgemeinen Formel VI, auf: $N[ZSi(R^{12})_\Omega(OR^2)_{3-\Omega}]_3$ (VI), wobei Z unabhängig ein bivalenter Alkylen-Rest ist, insbesondere aus der Reihe $-CH_2$-, $-(CH_2)_2$-, $-(CH_2)_3$- oder-$[CH_2CH(CH_3)CH]$-, $R^{12}$ ein linearer, verzweigter und/oder cyclischer Alkyl-Rest mit 1 bis 24 C-Atomen ist, insbesondere 1 bis 16 C-Atome, bevorzugt 1 bis 8 C-Atome, besonders bevorzugt 1 bis 4 C-Atome , oder ein Aryl-Rest ist und unabhängig $\Omega = 0$ oder 1 ist, $R^2$ ist unabhängig Wasserstoff oder eine Alkylgruppe mit 1 bis 4 C-Atomen. Kovalent ist das Amin-Strukturelement über eine Siloxanbindung, eine ursprüngliche $OR^2$-Gruppe, mit dem oligomeren Siloxanol verbunden. Tris-N-Aminoalkyl-Gruppen funktionalisierte oligomere Siloxanole können, wie alle erfindungsgemäß einsetzbaren oligomeren Siloxanole durch Homo-, Co-Kondensation oder auch durch Block-Co-Kondensation mit monomeren oder auch oligomeren Silanen, die mit einer oder mehreren der erfindungsgemäß einsetzbaren organofunktionellen Gruppen, wie Alkyl-, Halogenalkyl- und/oder Glycidoxyalkyl-Gruppen, substituiert sind, durch Hydrolyse und Kondensation und Entfernen des Alkohols hergestellt werden. Zur Tauglichkeit für das erfindungsgemäße Verfahren werden die oligomeren Silane im Wesentlichen lösemittelfrei eingesetzt.

Ferner kann die organofunktionelle Gruppe eine endständig terminierte Polyethergruppe der Formel VII sein, insbesondere kann das wässrige, oligomere Siloxanol auch ein lineares, cyclisches oder verzweigtes poyletherfunktionelles Siloxan oder ein Gemisch von polyetherfunktionellen Siloxanen sein, die durch Hydrolyse und Kondensation und insbesondere im Wesentlichen vollständiges Entfernen des Hydrolysealkohols oder enthaltender Lösemittel erhalten werden. Zur Herstellung der genannten Silane wird vollständig auf den Offenbarungsgehalt der WO 2006/037380 A1 verwiesen. Endständig terminierte Polyethergruppe der Formel VII

$$R^3\text{-}O[R^4\text{-}O]_{n^*}[(\text{-}R^5)_{m^{**}}]\text{-} \qquad (VII),$$

worin $R^3$ ein lineare, verzweigte oder cyclische Alkylgruppe mit 1 bis 8 C-Atomen, vorzugsweise Methyl, oder eine Alkylengruppe mit 2 bis 8 C-Atomen, vorzugsweise Vinyl oder Allyl, oder eine Arylgruppe mit 6 bis 12 C-Atomen, vorzugsweise Benzyl oder Phenyl oder Styryl, darstellt, $R^4$ gleich oder verschieden ist und $R^4$ für eine bivalente lineare, verzweigte oder cyclische Alkyl-Gruppe mit 1 bis 8 C-Atomen, vorzugsweise $-CH_2$- (Methyl als Methylen), und entsprechend Ethyl, n-Propyl, i-Propyl, n-Butyl oder tert.-Butyl, und $R^5$ für eine bivalente lineare, verzweigte oder cyclische Alkylgruppe mit 1 bis 8 C-Atomen, vorzugsweise Ethyl, n-Propyl, i-Propyl, n-Butyl sowie i-Butyl, n-Octyl, i-Octyl, n-Hexadecyl, n-Octadecyl, oder Fluoralkyl, beispielsweise - aber nicht ausschließlich -Tridecafluor-1,1,2,2-tetrahydroocytyl, oder eine Mercaptoalkylgruppe, vorzugsweise 3-Mercaptopropyl, oder eine Alkylengruppe mit 2 bis 8 C-Atomen, vorzugsweise Vinyl, oder eine Alkinylgruppe mit 2 bis 8 C-Atomen, oder eine Arylgruppe mit 6 bis 12 C-Atomen, vorzugsweise Benzyl, Phenyl oder Styryl, oder eine Aminalkylgruppe, wie sie vorstehend genannt ist, insbesondere N-Alkylaminalkyl, wie N-(Butyl)-3-aminopropyl- oder eine Epoxygruppe, wie sie vorstehend genannt ist, vorzugsweise 3-Glycidoxypropyl-, und n* gleich 1 bis 200, vorzugsweise 1 bis 100, besonders bevorzugt 2 bis 40, insbesondere 3 bis 30, sowie m** gleich 0 oder 1 sind. Besonders bevorzugte polyetherfunktionelle, wässrige, oligomere Siloxanole die in das erfindungsgemäße Verfahren eingesetzt werden können offenbart die DE 10 2004 049, insbesondere im Absatz [0037] sowie in den Beispielen, der Inhalt dieses Dokumentes und insbesondere dieses Absatzes wird hiermit in diese Anmeldung mit aufgenommen.

Gemäß einer bevorzugten Ausführungsform können Silizium-Atome des oligomeren Siloxanols, insbesondere die Strukturelemente, über zwei organofunktionelle Gruppen bzw. R verfügen, insbesondere können die Strukturelemente die folgenden Substitutionen aufweisen: Aminopropyl-/Methyl-; 2-Aminoethyl-/Methyl-, 2-Aminoethyl-/Phenyl-, 6-Amino-n-hexyl-/Methyl-, 3-Amino-n-propyl-/Methyl-, 1-Aminomethyl-/Methyl-, N-Butyl-3-aminopropyl-/Methyl-, N-Butyl-1-aminomethyl-/Methyl-, Methyl-/Methyl-, Propyl-/Methyl-, n-Octyl-/Methyl-, Octadecyl-/Methyl-Hexyl-/Methyl-, Hexadecyl-/Methyl-, 3,3,3-Trifluorpropyl-/Methyl-, 3,3,3-Trifluorpropyl-/Cyclohexyl-, 3,3,3-Trifluorpropyl-/Phenyl-, 3,3,3,2,2-Pentafluorpropyl-/Methyl-3,3,3-Trifluorpropyloxyethyl-/Methyl, Triaminopropyl oder Aminopropyl oder Diaminopropyl / Tridecafluorooctyl, Triaminopropyl oder Aminopropyl oder Diaminopropyl / Isobutyl, Triaminopropyl oder Aminopropyl oder Diaminopropyl / i-Octyl, Triaminopropyl oder Aminopropyl oder Diaminopropyl / Hexadecyl.

Dabei ist es bevorzugt, wenn 100 bis 0,01 % der Siliziumatome in den Strukturelementen des eingesetzten oligomeren Siloxanols mit mindestens einem organofunktionellen Rest bzw. R substituiert sind, weiter bevorzugt sind 50 bis 100 %, besonders bevorzugt 80 bis 100 %. Eine Substitution mit zwei organofunktionellen Resten kann ebenfalls bevorzugt sein. Die verbleibenden Siliziumatome und/oder die verbleibenden Bindungsstellen der Siliziumatome in den Strukturelementen können als Siloxanbindung oder im Wesentlichen als Hydroxy-Gruppe in den oligomeren Siloxanolen vorliegen.

Der bei der Herstellung der oligomeren Siloxanole bzw. Polysiloxane gebildete Hydrolysealkohol oder das bei der Herstellung verwendete organische Lösemittel wird vor der Verwendung der oligomeren Siloxanole im erfindungsgemäßen Verfahren oder zur Herstellung der erfindungsgemäß erhältlichen Zusammensetzung im Wesentlichen vollständig entfernt.

Bevorzugte erfindungsgemäß eingesetzte wässrige, oligomere Silane, zu denen auch Polysiloxane mit entsprechenden Strukturelementen gerechnet werden, sind aus den Patenten EP 0675128, EP 0953591, EP 0716128, EP 0716127, EP 0832911, EP 1031593, WO 2007/085320, WO 2006/010388 A1, WO 2007/085339 und WO 2009/030538, WO 2006/037380 bekannt, auf deren Offenbarungsgehalt vollständig Bezug genommen wird und deren Inhalt hiermit in diese Anmeldung mit aufgenommen wird. Insbesondere wird auf die in den genannten Dokumenten angeführten Beispiele hingewiesen.

Besonders bevorzugte mit nur einer organofunktionellen Gruppe substituierte oligomere Siloxanole weisen als organofunktionelle Gruppe, insbesondere Gruppe R, eine Epoxy-Gruppe, wie beispielsweise Glycidoxyalkyl-, 3-Glycidoxyproyl-, eine hydrolysierte Glycidoxyalkyl-Gruppe oder eine Amino-Gruppe, wie beispielsweise Aminoalkyl- , insbesondere N-Alkylaminoalkyl-, Diaminoalkyl-, Triaminoalkyl-, bis-N-Aminoalkyl, bis-N-Aminoalkylsilyl-Gruppe, tris-N-Aminoalkyl- oder auch eine tris-N-Aminoalkylsilyl-Gruppe auf.

Weitere besonders bevorzugte oligomere Siloxanole weisen mindestens die folgenden Kombinationen an Silizium-Atomen mit den genannten organofunktionellen Gruppen oder Strukturelemente mit den genannten Gruppen R auf, d.h. die oligomeren Siloxanole sind mit verschieden organofunktionellen Gruppen substituiert, insbesondere gemäß den Alternativen a), b), c) und/oder d):

a) mit Aminoalkyl-Gruppen, wobei zur Aminoalkyl-Gruppe insbesondere N-Aminoalkyl-, Diaminoalkyl-, Triaminoalkyl-, bis-(N-Aminoalkyl)-, bis-N-Aminoalkylsilyl-, tris-N-Aminoalkyl- und/oder tris-N-Aminoalkylsilyl-Gruppen gerechnet werden und Strukturelemente mit Alkylgruppen. Beispielsweise ein oligomeres Silan in dem R Diaminoalkyl- und Alkyl-Gruppen oder einer Amin-Gruppe und einer Alkyl-Gruppe entspricht;

b) mit Fluoralkyl-Gruppen und Amino- und/oder Aminoalkyl-Gruppen, wobei zur Aminoalkyl-Gruppe insbesondere N-Aminoalkyl-, Diaminoalkyl-, Triaminoaikyl-, bis-(N-Aminoalkyl)-, bis-N-Aminoalkylsilyl-Verbindung, tris-N-Aminoalkyl-Gruppen und/oder, tris-N-Aminoalkylsilyl-Gruppen gerechnet werden, gegebenenfalls zusätzlich mit Alkylgruppen;

c) mit Halogenalkyl-Gruppen und Amino- und/oder Aminoalkyl-Gruppen, wobei zur Aminoalkyl-Gruppe insbesondere N-Aminoalkyl-, Diaminoalkyl-, Triaminoalkyl-, bis-(N-Aminoalkyl)-, bis-N-Aminoalkylsilyl-Verbindung, tris-N-Aminoalkyl-Gruppen und/oder tris-N-Aminoalkylsilyl-Gruppen gerechnet werden;

d) mit Hydroxyalkyl-, Dihydroxyalkyl-, Epoxyalkyl- und/oder Polyether-Gruppen, wie vorstehend benannt, und mit Amino- und/oder Aminoalkyl-Gruppe, wobei zur Aminoalkyl-Gruppe insbesondere N-Aminoalkyl-, Diaminoalkyl-, Triaminoalkyl-, bis-(N-Aminoalkyl)-, bis-N-Aminoalkylsilyl-Verbindung, tris-N-Aminoalkyl-Gruppen und/oder tris-N-Aminoalkylsilyl-Gruppen gerechnet werden, gegebenenfalls zusätzlich mit einer Fluoralkyl-Gruppe; wobei die besagten Halogen- bzw. Fluoralkyl-Gruppen bevorzugt die bereits vorstehend definierten Gruppen sein können, insbesondere solche Fluorlkylfunktionen gemäß $-(CH_2)_s(CF_2)_rCF_3$ mit $0 \leq s \leq 16$ und $0 \leq r \leq 16$, vorzugsweise mit $s = 2$ und $0 \leq r \leq 13$.

Für alle oligomeren Siloxanolen gilt, dass die Strukturelemente statistisch verteilt oder auch als Homokondensate, als Block-Co-Kondensate mit den organofunktionellen Gruppen R in den oligomeren Silanen enthalten sein können.

Alle erfindungsgemäß eingesetzten oligomeren Siloxanole können einzeln oder auch als Mischung von oligomeren Siloxanolen, gegebenenfalls in Gegenwart von im Wesentlichen vollständig hydrolysierten monomeren Silanen, eingesetzt werden. Zur Herstellung einer erfindungsgemäßen Zusammensetzung werden in dem Verfahren bevorzugt 1 bis 60 Gew.-% pyrogene Oxide in Bezug auf die herzustellende Gesamtzusammensetzung dem oligomeren Silan zugegeben, vorzugsweise von 2 bis 40 Gew.-% und besonders vorzugsweise 3 bis 25 Gew.-%. Erfindungsgemäße Zusammensetzungen können somit entsprechende Gehalte an pyrogenen Oxiden aufweisen. Vorzugsweise werden 0,1 bis 60 Gew.-% pyrogenes Metalloxid in Bezug auf die Gesamtzusammensetzung dispergiert, bevorzugt 0,1 bis 25 Gew.-%, besonders bevorzugt werden 0,1 bis 20 Gew.-%, besser 0,1 bis 15 Gew.-%.

Bevorzugt erfolgt eine Zugabe des Metalloxids zu den Siloxanolen unter Energieeintrag im erfindungsgemäßen Verfahren, insbesondere durch hohe Rühr-und/oder Mischgeschwindigkeiten bzw. Verwirbelung zum Homogenisieren und/oder Dispergieren der Siloxanole mit dem Metalloxid. In Alternativen kann der Energieeintrag auch durch Eindüsen der pyrogenen Metalloxide in die wässrige, oligomere Siloxanole enthaltende Phase erfolgen. Zweckmäßig kann auch die Zugabe des pyrogenen Oxids zum oligomeren Siloxanol mit nachfolgendem Energieeintrag , insbesondere zur Homogenisierung und/oder Dispergierung sein.

Die bevorzugte Herstellung einer solchen Zusammensetzung bzw. Dispersion wird durch Einarbeiten der pyrogenen Kieselsäure, insbesondere als Pulver, in eine wässrige Lösung eines schon beschriebenen oligomeren Siloxanols oder Polysiloxans vorgenommen. Die pyrogene Kieselsäure oder das Metalloxid wird dem oligomeren Siloxanol zugegeben und verrührt. Hierzu wird idealerweise ein Rührwerk oder Dissolver eingesetzt. Die Rührwirkung bringt das Metalloxid vorzugsweise in die wässrige Phase mit ein, insbesondere sind die Metalloxidpulver in innigem Kontakt mit der wässrigen Phase, um eine Reaktion der oligomeren Siloxanole mit den Metalloxiden zu ermöglichen. Das so eingebrachte Pulver kann vorzugsweise durch hohen Energieeintrag dispergiert werden. Geeignete Dispersionsaggregate sind beispielsweise Rotor-Satorsysteme wie z. B. ein Ultraturrax oder ein Kinematica.

Bei der Dispersion und Reaktion des oligomeren Silans mit dem pyrogenen Metalloxid, insbesondere der pyrogenen Kieselsäure, erfährt das Produkt einen Temperaturanstieg. Normalerweise wird die Reaktion zwischen 10 und 100°C gefahren, vorzugsweise zwischen 20 und 80°C und besonders vorzugsweise zwischen 25 und 60°C. In alternativen Verfahrensführungen kann das Metalloxid einem erwärmten oligomeren Silan zugefügt werden oder die Reaktionsmischung wird anschließend erwärmt. Bevorzugt ist jedoch, dass die beim Dispergieren entstehende Wärme durch Kühlen der Reaktionsmischung abgeführt wird.

Nach dem erfindungsgemäßen Verfahren werden die in wässriger Phase unlöslichen Metalloxide an die in der wässrigen Phase löslichen oligomeren Siloxanole gebunden und verbessern dadurch möglicherweise die Stabilität der Metalloxide enthaltenden Zusammensetzungen. Vor der Anwendung können die erfindungsgemäßen Zusammensetzungen sowie die erfindungsgemäßen Endprodukte bei Bedarf vorteilhaft auf einen Gehalt zwischen 10 bis 0,01 Gew.-%, bevorzugt auf 5 bis 0,1 Gew.-% mit Wasser oder anderen Lösemitteln oder auch Gemischen daraus verdünnt werden.

Die Zusammensetzungen können auch im Wesentlichen wasserfrei nach einem Trocknungsschritt vorliegen. Beispielsweise, wenn das Verfahren das Aufbringen der Zusammensetzung auf ein Substrat und/oder einen Trocknungsschritt umfasst, kann die Zusammensetzung beispielsweise in Form einer Beschichtung auf einem Substrat, vorzugsweise auf einem vorbehandeltem Metall enthaltenden Substrat.

Dabei weist die Zusammensetzung vorzugsweise pyrogene Metalloxide auf, deren Primärteilchen eine mittlere Partikelgröße zwischen 2 bis 100 nm, insbesondere zwischen 10 bis 70 nm, bevorzugt zwischen 10 bis 60 nm aufweisen. Ferner enthält eine Zusammensetzung gelöste mit oligomeren Siloxanolen funktionalisierte pyrogene Metalloxide und Wasser, vorzugsweise ist das Metalloxid vollständig gelöst.

Zusätzlich zu den vorgenannten Merkmalen weist die Zusammensetzung vorzugsweise einen Gehalt an flüchtigen organischen Lösemitteln bzw. Hydrolysealkohol in der Gesamtzusammensetzung von unter 5 Gew.-% bis zur Nachweisgrenze, oder bis 0,0001,Gew.-% auf, insbesondere unter 3 bis 0,0001 Gew.-%, vorzugsweise unter 1 bis 0,0001 Gew.-%, wobei alle Bestandteile in der Zusammensetzung in Summe 100 Gew.-% ergeben.

Zusätzlich oder alternativ zu den vorgenannten Merkmalen weist die Zusammensetzung einen Gehalt an pyrogenem Metalloxid zwischen 0,001 bis 60 Gew.-%, insbesondere zwischen 0,01 bis 20 Gew.-% in Bezug auf das eingesetzte Metalloxid in der Gesamtzusammensetzung auf.

Vorzugsweise besteht die Zusammensetzung, insbesondere aus Wasser, und den Umsetzungsprodukten von wässrigen, im Wesentlichen lösemittelfreien, insbesondere alkoholfreien, und im Wesentlichen vollständig hydrolysierten oligomeren, organofunktionellen Siloxanolen mit mindestens einem Metalloxid, insbesondere einem pyrogenen Metalloxid, wobei das oligomere Siloxanol über mindestens eine oder mehrere kovalente Bindungen an das pyrogene Metalloxid gebunden ist, und gegebenenfalls einen oder mehrere Hydrolyse- und/oder Kondensationskatalysatoren.

Gemäß einer besonders bevorzugten Ausführungsform ist das funktionalisierte pyrogene Metalloxid in der Zusammensetzung in wässriger, im Wesentlichen lösemittelfreier Phase dispergiert. Diese Phase kann bei Bedarf mit Wasser oder einer wässrigen Phase weiter verdünnt werden, bspw. zur Herstellung von Metallbehandlungssystemen oder Lacken.

Zugleich ist das funktionalisierte Metalloxid nach vorstehenden Ausführungen kovalent an das oligomere Siloxanol gebunden, insbesondere in Form von Metall-Sauerstoff-Siliziumbindungen. Typischerweise bildet das Metalloxid eine Metall-Sauerstoff-Bindung mit mindestens einem Siliziumatom des eingesetzten oligomeren Silans aus. Diese Bindung kann idealisiert als $M\text{-}O\text{-}Si(\text{-}O\text{-})_a(R)_b(OH)_c$ dargestellt werden, wobei M generell ein Metallatom im Metalloxid symbolisiert, das über ein Sauerstoffatom (-O-) kovalent mit einem Siliziumatom eines oligomeren Siloxanols verbunden ist, wobei a, b und c unabhängig voneinander gleich 1, 2 oder 3 sind und a + b + c gleich 3 sind. Generell kann das Siliziumatom über $(\text{-}O\text{-})_a$ mit weiteren Siliziumatomen im oligomeren Siloxanol oder auch mit weiteren Metallen M kovalent verbunden sein. R entspricht den erfindungsgemäßen Definitionen.

Die Zusammensetzungen der funktionalisierten pyrogenen Metalloxide lassen sich in der Regel in jedem Verhältnis mit Wasser verdünnen. Zweckmäßig werden die Zusammensetzungen einen gewissen Zeitraum vor der Applikation oder im Rahmen der Verwendung in einem Metallvorbehandlungssystem mit Wasser oder einem anderen Lösemittel oder Lösungsmittelgemisch verdünnt. Übliche Verarbeitungskonzentrationen liegen bezogen auf einen Gehalt an mit oligomeren Siloxanolen funktionalisierte pyrogene Metalloxide in einer Zusammensetzung oder einem System vorzugsweise zwischen 90 bis 0,01 Gew.-%; insbesondere zwischen 60 und 0,1 Gew.-%, bevorzugt zwischen 40 und 0,5 Gew.-%, besonders bevorzugt zwischen 30 und 1 Gew.-% in Bezug auf die gesamte Zusammensetzung. Die unverdünnten oder verdünnten Zusammensetzungen können dann wie nachstehend erläutert verwendet werden, in oder als Metallvorbehandlungszusammensetzungen oder zur Herstellung von Metallvorbehandlungszusammensetzungen bzw. von Metallvorbehandlungssystemen. Vorzugsweise werden die Zusammensetzungen als Grundsubstanz für die Formulierung von Metallvorbehandlungszusammensetzungen eingesetzt. Dazu können sie gegebenenfalls mit weiteren Zusatzstoffen versetzt werden, wie beispielsweise Wasser, organische Lösemittel, Lösemittelgemische, Zusätze zum Einstellen des pH-Wertes, Hilfsmittel, Netzmittel, wie BYK 348 oder TEGO WET 742), Korrosionsschutzpigmente, Pigmente, Korrosionsschutzzusätze, Farbstoffe, Füllstoffe, Kunststoffe, Polymere, Harze und/oder Additive zum Einstellen der Viskosität.

Gegenstand ist ferner die Verwendung einer Zusammensetzung zur Modifizierung, Behandlung und/oder Herstellung von Formulierungen, Beschichtungen, Substraten, Artikeln, Metallvorbehandlungs-zusammensetzungen, zur Herstellung eines Blankmetallkorrosionsschutzes, als Haftvermittler für eine Beschichtung auf Substraten, unter einer Lackschicht zur Verbesserung des Korrosionsschutzes, für das homogene Einbringen von pyrogenen Metalloxiden in Drittsysteme, zur Haftvermittlung der Lackschicht und/oder zur Einstellung der Viskosität eines Beschichtungsmittels, einer Dicht- oder Klebemasse, beispielsweise von Farben, Lacken, Dichtpasten, oder zur Herstellung von Metallvorbehandlungszusammensetzungen. Dabei ist es besonders bevorzugt, wenn die Zusammensetzungen oder diese enthaltende Metallvorbehandlungszusammensetzungen oder Lacke zur Modifizierung, Beschichtung und/oder Behandlung oder als Haftvermittler für eine Beschichtung auf Substraten, insbesondere auf verchromten, phosphatierten, verzinkten, verzinnten, geätzten und/oder auf andere Weise vorbehandelten Substraten eingesetzt werden. Bevorzugte zu modifizierende und/oder zu behandelnde Substrate umfassen Metalle oder diese enthaltende Legierungen, wie insbesondere Stahl, Stahllegierungen, Aluminium, Aluminiumlegierungen, Magnesium, Magnesiumlegierungen, Bronze, Kupfer, Zinn und/oder Zink oder eine Legierung der genannten Metalle. Dazu kann die Zusammensetzung vorzugsweise auch in Lackformulierungen eingearbeitet werden. Dabei kann das Substrat eine unbehandelte und/oder behandelte Oberfläche aufweisen. Eine behandelte Oberfläche kann beispielsweise chemisch, galvanisch, mechanisch, mittels Plasma und/oder mittels sonstiger Behandlungsmethoden vorbehandelt worden sein.

Gleichfalls ist Gegenstand die Verwendung der Zusammensetzungen insbesondere als oder in Metallvorbehandlungszusammen-setzungen, zur Herstellung eines Blankmetallkorrosionsschutzes, als Haftvermittler, insbesondere auf Stahl, Stahllegierungen, Aluminium, Aluminiumlegierungen, Magnesium, Magnesiumlegierungen, Bronze, Kupfer, Zinn und/oder Zink und/oder Substraten enthaltend diese. Als Blankmetalle werden beispielsweise Metalle aufgefasst, die nicht verzinkt, verzinnt, phosphatiert oder sonstwie chemisch oder galvanisch mit einer Schutzschicht versehen wurden. Eine chemische, mechanische und/oder galvanische Behandlung zur Erzeugung eines vorgereinigten Blankmetalls kann zur verbesserten Haftung der Zusammensetzungen beitragen.

Gegenstand ist zudem die Verwendung der Zusammensetzungen, wie auch der Metallvorbehandlungssysteme, unter einer Lackschicht zur Verbesserung des Korrosionsschutzes und/oder zur Haftvermittlung der Lackschicht. Zur Haftvermittlung kann das funktionalisierte Metalloxid und/oder die Zusammensetzung vorzugsweise in eine Lackformulierung eingearbeitet werden.

Ein weiterer Gegenstand betrifft die Verwendung der Zusammensetzungen, wie auch der Metallvorbehandlungssysteme, zur Einstellung, insbesondere zur Erhöhung der Viskosität eines Beschichtungsmittels. Das Beschichtungsmittel kann auch einen Lack, einen Primer oder generell ein Mittel betreffen, das geeignet ist nach dem Auftragen auf ein Substrat eine dünne Schicht auszubilden. Die genannten Metallvorbehandlungszusammensetzungen bzw. -systeme, insbesondere in Form einer Dispersion, werden bevorzugt auf Metallsubstrate aufgetragen. Vorzugsweise wird die Dispersion mit einer Rakel, durch Tauchen, Fluten oder Spritzen, oder mit dem Spin-Coat Verfahren aufgetragen.

Die zu behandelnden Metallsubstrate bestehen vorzugsweise aus Stahl, Aluminium, Magnesium, Bronze, Kupfer, Zinn und Zink. Die Zusammensetzungen und/oder Systeme werden bevorzugt auch auf schon vorbehandelte Bleche aufgetragen, wie z. B. verzinkte, verzinnte, phosphatierte, mit Chrom III oder Chrom VI behandelte, oder anderen Vorbehandlungsmethoden geschützte Bleche und Substrate.

Anschließend können die so behandelten Bleche vorzugsweise bei einer Temperatur zwischen 10 und 200 °C, vorzugsweise bei einer Temperatur zwischen 20 und 150 °C und besonders vorzugsweise bei einer Temperatur zwischen 50 und 120 °C getrocknet werden.

Die so vorbehandelten Bleche können gegebenenfalls mit einem Beschichtungsmittel beschichtet werden. Geeignete Beschichtungsmittel sind z. B. lösemittelbasierte Systeme auf Basis eines Polyurethans (sowohl 1-Komponenten als auch 2-Komponenten), Acrylats, von Epoxy-Verbindungen, eines Polyester, Alkyds oder eines lösemittelfreien UV-härtenden Systems auf Basis eines Acrylats oder einer Epoxy-Verbindung. Des Weiteren sind auch wässrige Systeme auf Basis von Melamin oder Dispersionen auf Basis eines Acrylats oder Polyurethans bevorzugt.

Des Weiteren können die Zusammensetzungen und/oder funktionalisierten Metalloxide, insbesondere als Dispersionen, in ein Beschichtungsmittel eingebracht werden, um die Viskosität des Beschichtungsmittels zu erhöhen. Dies ist insbesondere in Beschichtungsmitteln, die durch einen Streich-, Sprüh- oder Spritzprozess aufgetragen werden notwendig.

Oft werden in lösemittelhaltigen Anstrichen pyrogene Kieselsäuren oder organisch modifizierte pyrogene Kieselsäure eingesetzt. In wässrigen, insbesondere im Wesentlichen auf rein wässriger Phase basierenden, wässrigen Lacken und Farben war dies bislang nicht möglich. Die erfindungsgemäßen Dispersionen erhöhen die Thixotropie des Beschichtungsmittels und verbessern somit dessen Verarbeitbarkeit, insbesondere beim Auftragen auf das Substrat.

In den Zusammensetzungen, insbesondere in den Dispersionen, sind die Silane mit den Partikeln verankert, und zwar insbesondere über kovalente Bindungen. Aufgrund der Verankerung der oligomeren Silane an die pyrogenen Metalloxide erhöht sich die Stabilität der Zusammensetzungen und/oder der funktionalisierten Metalloxide über einen weiten pH-Wertbereich. Bislang war eine normale Dispersion basierend auf pyrogener Kieselsäure bei niedrigen pH-Werten nur kurzzeitig stabil. Bei Silanmodifizierung ist die Stabilität deutlich besser, wie nachfolgend gezeigt wird.

Gegenstand sind auch Beschichtungen, wie Primer, Haftschichten, Lackschicht, die erhältlich sind durch Anwendung der Zusammensetzung und/oder der funktionalisierten Metalloxide und/oder unter Verwendung einer Zusammensetzung oder eines funktionalisierten Metalloxids in einer Formulierung, beispielsweise in einem Lack. Gegenstand sind auch Artikel die erhältlich sind durch Behandlung, Modifizierung und/oder Beschichtung eines Substrates mit einer Zusammensetzung, einem funktionalisierten Metalloxid und/oder einer sie aufweisenden Formulierung.

Die Erfindung wird nachfolgend anhand einiger Ausführungsbeispiele beschrieben, ohne die Erfindung auf diese Beispiele zu beschränken.

### Beispiele

Bestimmungsmethoden:

Der Alkoholgehalt nach Hydrolyse wird gaschromatographisch bestimmt. Dazu wird eine Probe einer definierten Menge mit Schwefelsäure (5 g Probe, 25 ml $H_2SO_4$, w = 20 %) hydrolysiert. Es werden 75 ml destilliertes Wasser zugegeben. Anschließend mit Natronlauge neutralisiert und eine Wasserdampfdestillation durchgeführt. Interner Standard 2-Butanol. Bestimmung von $SiO_2$ erfolgt nach Zersetzung mittels Schwefelsäure und Kjeldahl-Katalysator, indem das Gewicht des ausgeschiedenen $SiO_2$ bestimmt wird. Die Viskositätsbestimmung erfolgt in der Regel nach DIN 53015 sowie nach DIN EM ISO 3219. Die Stampfdichte wurde in Anlehnung an DIN EN ISO 707/11, Aug. 1983 ermittelt. Die Bestimmung des Feststoffgehaltes, d. h. der nicht flüchtigen Anteile in wässrigen und lösemittelhaltigen Zubereitungen kann in Ablehnung an DIN / EN ISO 3251 (Bestimmung des nicht flüchtigen Anteils von Lacken, Anstrichstoffen und Bindemitteln für Lacke und Anstrichstoffe) wie folgt durchgeführt werden (QM-AA):

Prüfgeräte:

Thermometer (Ablesegenauigkeit 2 K), Einmalschalen aus Aluminium (d= ca. 65 mm, h= ca. 17 mm)
Analysenwaage (Genauigkeit 1 mg)
Trockenschrank bis 250 °C

Exsikkator

Eine Probe wird auf eine festgelegte Temperatur (z. B. 125°C) erwärmt, um auf diese Weise die flüchtigen Anteile der Probe zu entfernen. Erfasst wird der Feststoffgehalt (Trockenrückstand) der Probe nach der Wärmebehandlung.

In eine Einmalschale wird auf einer Analysenwaage ca. 1 g Probe eingewogen (Genauigkeit 1 mg). Das Produkt ist durch kurzes Umschwenken gleichmäßig in der Einmalschale zu verteilen. Die Schale wird 1 h bei ca. 125 °C in einem Trockenschrank gelagert. Nach Beendigung des Trockenvorganges wird die Schale 20 min in einem Exsikkator auf Raumtemperatur abgekühlt und auf der Analysenwaage auf 1 mg genau zurückgewogen. Es sind pro Versuch mindestens 2 Bestimmungen durchzuführen.

$$\text{Feststoffgehalt (\%)} = \frac{\text{Auswaage (g) x 100}}{\text{Einwaage (g)}}$$

Feststoffgehalt - Prozentuales Verhältnis der Probenmasse vor und nach der Behandlung; Auswaage: Die Probemasse nach der Behandlung; Einwaage: Die Probemasse vor der Behandlung.

1) Eingesetzte pyrogene Metalloxide (a) und oligomere Siloxanole (b)

a) Pyrogene Metalloxide:

Die einsetzbaren erfindungsgemäßen pyrogenen Metalloxide weisen in der Regel einen Trockenverlust (2 h bei 105 °C) von kleiner oder gleich 1.5 Gew.-% in Bezug auf das eingesetzte Metalloxid auf, bevorzugte Werte liegen bei kleiner oder gleich 1,0 Gew.-%. Der daran anschließend ermittelte Glühverlust des so getrockneten Mischoxids liegt ebenfalls in der Regel bei kleiner oder gleich 1.5 Gew.-%, bevorzugt bei kleiner oder gleich 1 Gew.-%.

Als pyrogenes $SiO_2$ (py $SiO_2$-1) wurde eine hydrophile, pyrogene Kieselsäure mit einer spezifischen Oberfläche (BET) in $m^2$/g von etwa $200 \pm 25$ $m^2$/g, eingesetzt. Der Gehalt an $SiO_2$ in der geglühten Substanz beträgt etwa $\geq$ 99,8 Gew.-%. Die mittlere Größe ($d_{50}$) der Primärteilchen liegt bei circa. 12 nm. Die Stampfdichte liegt bei etwa 50 g/l. Als weiteres pyrogenes $SiO_2$ (py $SiO_2$-2 wurde eine hydrophile, pyrogene Kieselsäure mit einer spezifischen Oberfläche (BET) in $m^2$/g von etwa $90 \pm 15$ $m^2$/g eingesetzt. Der Gehalt an $SiO_2$ der geglühten Substrat beträgt etwa $\geq$ 99,8 Gew.-%. Die mittlere Größe der Primärteilchen ($d_{50}$) liegt bei circa. 20 nm. Die Stampfdichte liegt bei etwa 80 g/l. Die genannten pyrogenen Kieselsäuren zeichnen sich häufig dadurch aus, dass sie in Form von partikulären Aggregaten der Primärteilchen vorliegen, die durch teilweises Verschmelzen der Primärteilchen unter Kettenbildung entstanden sind.

Als weiteres pyrogenes Metalloxid wurden als (py MO-1) ein hydrophiles, pyrogenes Mischoxid eingesetzt, dass Siliciumdioxid mit einem Gehalt von etwa um 1 Gew.-%, insbesondere um 0,3 bis 1.3 Gew.-%, in Bezug auf die Gesamtzusammensetzung an Aluminiumoxid enthält. Der Gehalt an Siliziumdioxid liegt in dem geglühten Mischoxid bei circa größer gleich 98.3 Gew.-%. Die spezifische Oberfläche (BET) wurde mit etwa $80 \pm 20$ $m^2$/g bestimmt, wobei die Primärteilchen eine mittlere Größe von etwa 30 nm aufweisen. Die Stampfdichte liegt bei etwa 60 g/l.

Zudem wurde als pyrogenes Mischoxid, als py Mo-2 bezeichnet, ein pyrogenes, hydrophiles Mischoxid, dass Siliciumdioxid mit einem Gehalt von etwa um 1 Gew.-%, insbesondere um 0,3 bis 1.3 Gew.-% in Bezug auf die Gesamtzusammensetzung Aluminiumoxid enthält. Der Gehalt an Siliziumdioxid liegt in dem geglühten Mischoxid bei circa größer gleich 98.3 Gew.-%. Die spezifische Oberfläche (BET) wurde mit etwa $170 \pm 30$ $m^2$/g bestimmt, wobei die Primärteilchen bzw. -partikel eine mittlere Größe von etwa 15 nm aufweisen. Die Stampfdichte liegt um 50 g/l.

Des Weiteren wurde ein pyrogenes Cerdioxid (py $CeO_2$) eingesetzt. Die bevorzugte spezifische Oberfläche (BET) kann bei um $50 \pm 15$ $m^2$/g liegen.

Ein pyrogenes Titandioxid (TiO-1) mit den folgenden Eigenschaften wurde ebenfalls eingesetzt. Der Gehalt an Titandioxid, in Bezug auf das geglühte , liegt bei etwa größer gleich 99,5 Gew.-% in Bezug auf die Gesamtzusammensetzung. Die spezifische Oberfläche (BET) liegt, bei einer ermittelten mittleren Teilchengröße von etwa 21 nm, um $50 \pm 15$ $m^2$/g. Als Stampfdichte wurden circa 130 g/l ermittelt. Das pyrogene Titandioxid kann herstellbedingt auch geringste Mengen der Oxide von Eisen, Aluminium und/oder Silizium enthalten.

**b) Beispiele Herstellung der wässrigen,** oligomeren Siloxanole:

Als Reaktionsapparatur für alle nachfolgenden Beispiele zur Herstellung der wässrigen, oligomeren Siloxanolewurde ein temperierbarer Laborrührkesselreaktor mit 1 oder 2 l Inhalt, Innentemperaturmessung, Flüssigkeitsdosiereinrichtung, Destillationsbrücke mit Kopftemperaturmessung, Produktkühler, Destillatvorlagebehälter; Labordrucknutsche (2 l Inhalt) verwendet. Zur Einstellung eines Vakuums diente eine Vakuumpumpe Des Weiteren können gegebenenfalls auftretende Schäumungsprobleme während der Destillation verhindert werden, indem der Reaktionslösung einige Tropfen eines handelsüblichen Entschäumers auf Basis wässriger Silikonharzemulsionen zugesetzt werden. Eine durch Zusatz des Entschäumer resultierende leichte Trübung kann durch Filtration über eine Drucknutsche mit Glasfaserfilter (Porenweite < 1 μm) entfernt werden.

Die in nachfolgend hergestellten wässrigen, oligomeren Siloxanole weisen vorzugsweise die folgenden Eigenschaften auf: Das Produkt ist klar und in jedem Verhältnis mit Wasser mischbar. Der Gehalt an Alkoholen und/oder hydrolysierbaren Alkoxygruppen liegt bei weniger als 3 Gew.-%, bevorzugt in der Regel unter 0,5 Gew.-%. Der Flammpunkt der Produkte liegt bei Werten > 95 °C und sinkt auch nicht bei weiterem Verdünnen mit Wasser, da keine weitere Hydrolyse stattfindet und somit keine weiteren Alkohole freigesetzt werden.

**Herstellung Silox-1:**

Die Herstellung des wässrigen, oligomeren Siloxanols mit hydrolysierten EpoxyGruppen (Silox-1) erfolgt durch Umsetzung eines 3-Glycidyloxypropyl-Trimethoxysilans. In der oben beschriebenen Apparatur werden 708 g 3-Glycidyloxypropyl-Trimethoxysilans vorgelegt. 162 g Wasser und 3,5 g Ameisensäure (85%ig) werden gemischt und innerhalb von 15 Minuten zudosiert. Die Temperatur steigt hierbei von 20 auf 35 °C. Der Ansatz wird zwei Stunden bei 60 °C gerührt. Danach wird innerhalb von 8 Stunden ein Methanol/Wasser-Gemisch abdestilliert und gleichzeitig gewichtsbezogen durch Wasser ersetzt (Druck: 300 - 133 mbar; Temperatur: 42 - 52 °C). Wenn die Kopftemperatur bei 133 mbar ca. 50 °C beträgt und das Kopfprodukt nur noch Wasser enthält, wird die Destillation beendet und es wird die entsprechende Menge Wasser zugegeben, so dass eine Lösung mit w(3-Glycidyloxypropyl-Trimethoxysilans) = 40 % in Wasser entsteht.

**Herstellung Silox-2:**

Die Herstellung des wässrigen, oligomeren mit Diamino- und Alkylgruppen funktionalisierten Siloxanols (Silox-2) erfolgt durch Umsetzung von 1 mol Aminoethylaminopropyltrimethoxysilan, 0,41 mol Methyltriethoxysilan und 24,6 mol deionisiertem Wasser in einem 1 L-Dreihalskolben mit Rührmotor, Kühler und Thermometer. Zu Beginn ist ein Temperaturanstieg von etwa 30 °C zu beobachten. Es wurde eine Stunde gerührt. Dem Gemisch wurden 0,07 g SAG 5693 (Entschäumer der Firma OSi Specialties of Danbury, Conneticut; oberflächenaktives Siloconmittel) zugesetzt. Die Reaktionsapparatur wurde mit einer Vigreux-Kolonne, (Fraktionskolonne), und einem Destillationsaufsatz mit Kühler ausgestattet. Das Reaktionsgemisch wurde erwärmt und das Wasser Methanol/Ethanol/Gemisch abdestilliert, bis die Kopftemperatur konstant bei 100°C bleibt. Die Ethanolkonzentration wird auf unter 1 Gew.-% eingestellt. Die Menge an Destillat wurde durch die Zugabe von Wasser wieder ersetzt und es wurde abgekühlt.

**Herstellung Silox-3:**

Die Herstellung des wässrigen, oligomeren mit Diamino- und Alkylgruppen funktionalisierten Siloxanols (Silox-3) erfolgt durch Umsetzung von 400 g Aminopropyltriethoxysilan und 600 g deionisiertem Wasser in einem 2 L-Dreihalskolben mit Rührmotor, Kühler und Thermometer. Zu Beginn ist ein Temperaturanstieg zu beobachten. Es wurde eine Stunde gerührt. Dem Gemisch wurden 0,07 g SAG 5693 (Entschäumer der Firma OSi Specialities of Danbury, Conneticut; oberflächenaktives Siloconmittel) zugesetzt. Die Reaktionsapparatur wurde mit einer Vigreux-Kolonne, (Fraktionskolonne), und einem Destillationsaufsatz mit Kühler ausgestattet. Das Reaktionsgemisch wurde erwärmt und das Wasser Ethanol/Gemisch abdestilliert, bis die Kopftemperatur konstant bei 100 °C bleibt. Die Ethanolkonzentration wird auf unter 1 Gew.-% eingestellt. Die Menge an Destillat wurde durch die Zugabe von Wasser wieder ersetzt und es wurde abgekühlt.

**Herstellung Silox-4:**

Die Herstellung eines wässrigen, oligomeren Siloxanols (Silox-4) mit Aminopropyl-und Isobutyl-Gruppen im molaren Verhältnis von 1 : 1 erfolgt, indem in der oben beschriebenen Apparatur 221 g Aminopropyltriethoxysilan und 178 g Isobutyltri-methoxysilan gemischt werden und 54 g Wasser zugegeben werden. Nach einer halben Stunde werden unter Rühren weitere 64 g Wasser innerhalb von 15 Minuten über die Dosiervorrichtung hinzugegeben. Die Temperatur steigt hierbei von 20 °C auf ca. 60 °C. Innerhalb weiterer 15 Minuten wird über die Dosiervorrichtung 110 g HCl (33 Gew.-% in Wasser) unter Rühren zudosiert. Innerhalb von ca. 4 h wird bei einer Sumpftemperatur von bis zu 52 °C bei einem Druck von 130 mbar ein Ethanol/Methanol/Wasser-Gemisch abdestilliert, bis die Kopftemperatur ca. 50 °C beträgt und das Kopfprodukt nur noch Wasser enthält. Während der Destillation wird Wasser über die Dosiereinrichtung mengenmäßig in dem Maße dem Produkt zugeführt, wie mengenmäßig Destillat entfernt wird.

**Herstellung Silox-5:**

Die Herstellung eines wässrigen, oligomeren Silans mit hydrolysierten Epoxygruppen in Gegenwart eines wässrigen Kieselsol (Silox-5). 415,6 g 3-Glycidyloxypropyl-Trimethoxysilan wurden vorgelegt und unter Rühren wurden 20,6 g Essigsäure zugegeben. Direkt anschließend wurden 41,1 g TYZOR® NPZ (Zirkonium-tetra-n-propanolat) zudosiert. Nach 5 Minuten war die Temperatur um etwa 2 bis 5 °C angestiegen. Es wurden dann innerhalb von 1 Minute 417,0 g Levasil® 100S45% (wässriges Kieselsol mit 45 Gew.-% Feststoffgehalt) eingerührt. Dabei war auf eine gute Rührwirkung zu achten. Direkt anschließend wurden 477,3 g deionisiertes Wasser ebenfalls schnell zugetropft. Nach Erreichen der Höchsttemperatur von circa 42°C wurde die opake Dispersion für 2 Stunden bei 75 bis 80 °C (Rückfluss) weitergerührt. Nach Abkühlen auf circa 50 °C Sumpftemperatur wurden 356,4 g deionisiertes Wasser nachdosiert. Anschließend wurde das Methanol bei einer Sumpftemperatur von etwa 50 bis 60 °C und einem Absolutdruck von etwa 270 mbar abdestilliert. Die Sumpftemperatur stieg zum Ende der Destillation bei unverändertem Druck auf 60 bis 65 °C an. Die Kopftemperatur stieg ebenfalls auf über 62 °C an. Es wurde nur noch Wasser abdestilliert und damit die Destillation beendet. Nach Abkühlen auf ≤ 50 °C wurde die abdestillierte Menge an deionisiertem Wasser, die oberhalb von 59,4 g lag, nachdosiert. Der Gehalt an Methanol liegt deutlich unterhalb 3 Gew.-%. Die Dispersion wurde noch mindestens 2 Stunden weitergerührt. Die Abfüllung erfolgte bei Raumtemperatur. Das erhaltene Produkt hat ein milchig opakes Aussehen. Das Verhältnis der Feststoffmasse des Kieselsols zur Masse des 3-Glycidyloxypropyl-Trimethoxysilans betrug 0,45. Die Ausbeute lag mit 1498 g bei nahezu 100 %.

Der in Anlehnung an DIN ISO 3251 bestimmte Feststoffgehalt (1 h, 125°C) beträgt etwa 36 Gew.-% und der $SiO_2$ Gehalt bei circa 16 Gew.-%. Die Viskosität (20 °C) bestimmt nach DIN 53015 lag bei circa 8 mPa s. Der pH-Wert betrug 4 bis 5 und die nach DIN 1757 bestimmte Dichte bei 20 °C lag bei 1,148 g/ml.

**2) Stabilität bei Lagerung von Dispersionen mit pyrogenen Metalloxiden**

Die nachfolgenden Beispiele stellen die Stabilitäten von Vergleichsbeispielen anhand von Zusammensetzungen aus Wasser und 20 Gew.-% pyrogenem $SiO_2$ (py $SiO_2$-1) ad 100 Gew.-% und einer erfindungsgemäßen Zusammensetzung basierend auf oligomeren Siloxanolen, in die 20 Gew.-% pyrogenes $SiO_2$ (py $SiO_2$-1) eingearbeitet wurden ad 100 Gew.-%, gegenüber.

a) Bewertung der Zusammensetzungen 24 Stunden nach der Herstellung und Lagerung bei Raumtemperatur, Tabelle 1.

Tabelle 1:

| pH-Wert | (py $SiO_2$-1 (20 Gew.-%) Dispersion in Wasser | Silox-1 mit 20 Gew.-% (py $SiO_2$-1) |
|---|---|---|
| 4 | flüssig | flüssig |
| 6 | Flockulation | flüssig |
| 8 | flüssig | flüssig |
| 10 | flüssig | flüssig |

b) Bewertung der Zusammensetzungen drei Tage nach der Herstellung und Lagerung bei Raumtemperatur, Tabelle 2.

Tabelle 2:

| pH-Wert | (py $SiO_2$-1 (20 Gew.-%) Dispersion in Wasser | Silox-1 mit 20 Gew.-% (py $SiO_2$-1) |
|---|---|---|
| 4 | Fest | Flüssig |
| 6 | Fest | Flüssig |
| 8 | Fest | Flüssig |
| 10 | flüssig | Flüssig |

c) Bewertung der Zusammensetzungen vier Wochen nach der Herstellung und Lagerung bei Raumtemperatur, Tabelle 3.

Tabelle 3:

| pH-Wert | (py SiO$_2$-1) (20 Gew.-%) Dispersion in Wasser | Silox-1 mit 20 Gew.-% (py SiO$_2$-1) |
|---|---|---|
| 4 | Fest | Flüssig |
| 6 | Fest | Flüssig |
| 8 | fest | Flüssig |
| 10 | flüssig | flüssig |

**3) Beispiele 1 bis 27**

Zur Herstellung der erfindungsgemäßen Zusammensetzungen bzw. Dispersionen wurde jeweils das wässrige, oligomere Siloxan vorgelegt und ein pyrogenes Metalloxid, gemäß der nachfolgenden Tabelle 4, dazugegeben. Die Ansätze wurden mit einem Dissolver bei 2000 U/ min 10 min homogenisiert. Anschließend erfolgte die Dispergierung mit dem Kinematica PT 3100 für 15 min bei 8000 U/min.

Tabelle 4:

| Beispiel | pyrogenes Metalloxid; in [Gew.-%] | oligomeres Siloxanol | Stabilität der Dispersion | pH |
|---|---|---|---|---|
| 1 | (py SiO$_2$-2);[4,8] | Silox-2 | Leichte Sedimentation | 10,7 |
| 2 | (py SiO$_2$-2); [9,1] | Silox-2 | Leichte Sedimentation | 10,7 |
| 3 | (py SiO$_2$-2); [16,7] | Silox-2 | Stabil | 10,7 |
| 4 | (py SiO$_2$-1) [4,8] | Silox-2 | Stabil | 10,7 |
| 5 | (py SiO$_2$-1); [16,7] | Silox-2 | Stabil | 10,7 |
| 6 | (py SiO$_2$-2); [16,7] | Silox-1 | Stabil | |
| 7 | (py SiO$_2$-1); [16,7] | Silox-1 | Flüssig nach Aufrühren | |
| 8 | (py MO-1); [16,7] | Silox-1 | Stabil | 3,1 |
| 9 | (py MO-2); [16,7] | Silox-1 | Stabil | 3,0 |
| 10 | (py CeO$_2$); [4,8] | Silox-1 | Stabil | 3,66 |
| 11 | (py CeO$_2$); [16,7] | Silox-1 | Stabil | 3,76 |
| 12 | ZrO$_2$; [4,8] | Silox-1 | Stabil | 3,26 |
| 13 | ZrO$_2$; [16,7] | Silox-1 | Stabil | 3,45 |
| 14 | (py SiO$_2$-1); [4,8] | Silox-5 | Stabil | 4,53 |
| 15 | (py MO-1); [9,1] | Silox-5 | Stabil | 4,57 |
| 16 | (py MO-1); [16,7] | Silox-5 | Stabil | 4,53 |
| 17 | (py MO-2); [4,8] | Silox-5 | Stabil | 4,56 |
| 18 | ZrO$_2$; [4,8] | Silox-5 | Leichte Sedimentation | 4,82 |
| 19 | ZrO$_2$,[16,7] | Silox-5 | Leichte Sedimentation | 4,75 |
| 20 | (py SiO$_2$-2); [16,7] | Silox-3 | Flüssig nach Aufrühren | 11,0 |
| 21 | (py SiO$_2$-1); [4,8] | Silox-3 | Leichte Sedimentation | |
| 22 | (TiO-1); [16,7] | Silox-3 | Leichte Sedimentation | |
| 23 | CeO$_2$; [4,8] | Silox-3 | Leichte Sedimentation | |
| 24 | CeO$_2$; [16,7] | Silox-3 | Leichte Sedimentation | |

(fortgesetzt)

| Beispiel | pyrogenes Metalloxid; in [Gew.-%] | oligomeres Siloxanol | Stabilität der Dispersion | pH |
|---|---|---|---|---|
| 25 | (py SiO$_2$-1); [9,1] | Silox-4 | Stabil | |
| 26 | (py SiO$_2$-1); [4,8] | Silox-4 | Stabil | |
| 27 | (py MO-2); [9,1] | Silox-4 | Stabil | |

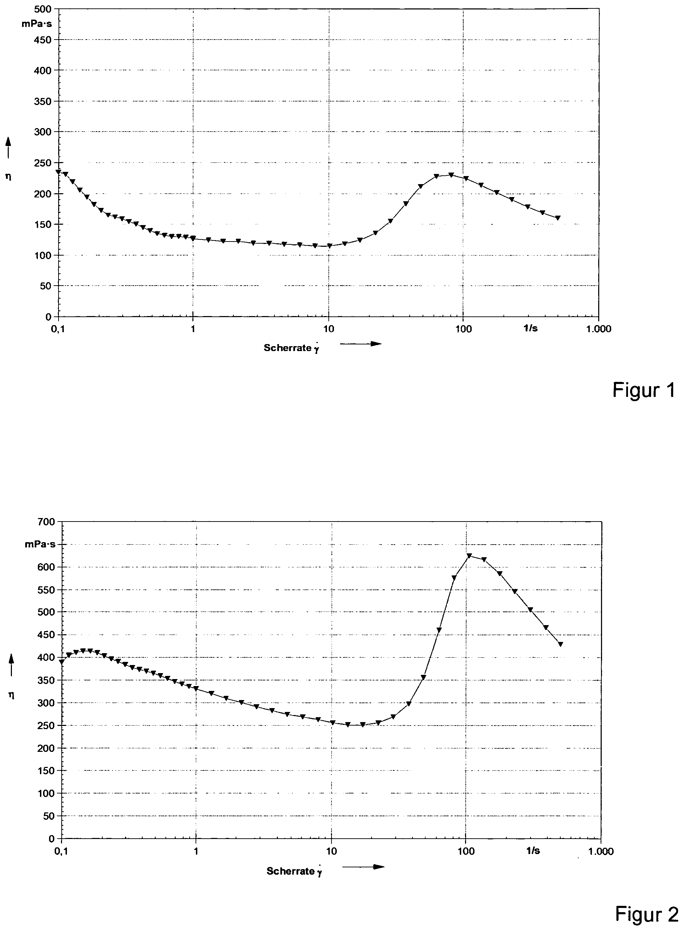

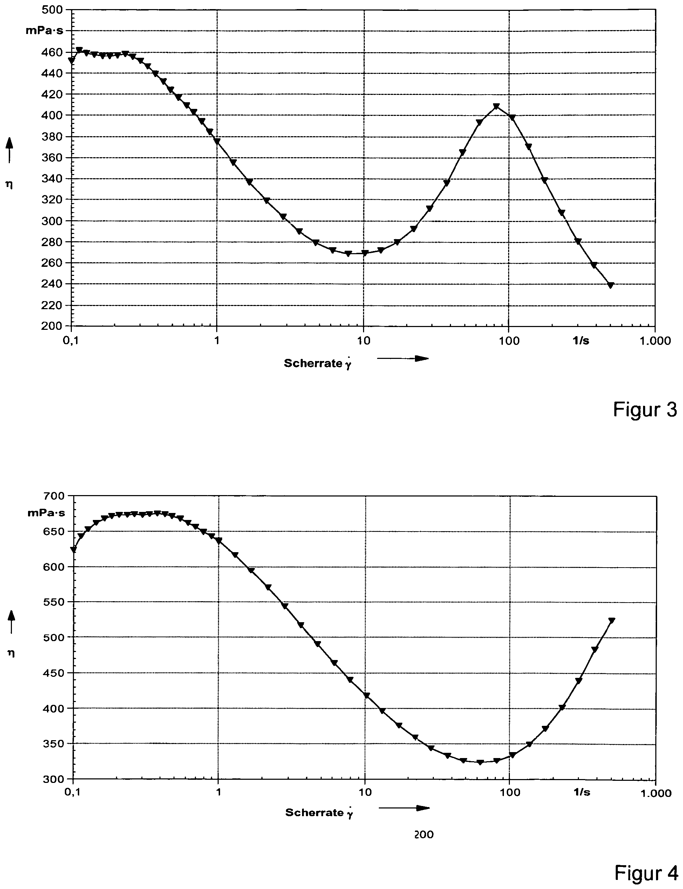

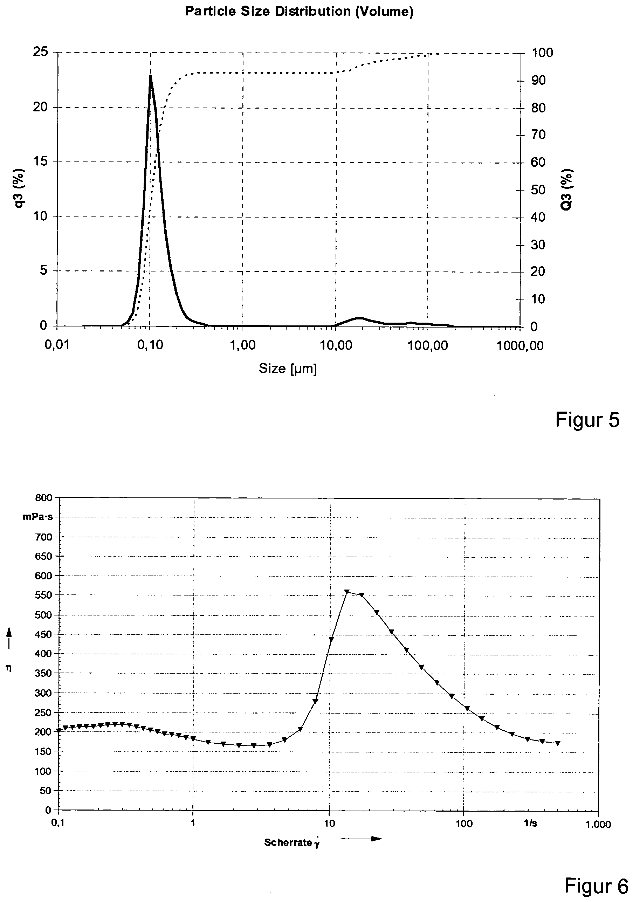

In den Figuren 1 bis 6 sind die Viskositätkurven (Viskosität ($\eta$) in m·Pas vs Scherrate $\dot{\gamma}$n in 1/sek.) und Partikelgrößenverteilung einiger der Beispiele dargestellt:

Figur 1:    Viskositätskurve des Beispiels 3;
Figur 2:    Viskositätskurve des Beispiels 5;
Figur 3:    Viskositätskurve des Beispiels 6;
Figur 4:    Viskositätskurve des Beispiels 7;
Figur 5:    Partikelgrößenverteilung in q3 (%) vs Größe in ($\mu$m) des pyrogenen Metalloxids des Beispiels 7;
Figur 6:    Viskositätskurve des Beispiels 20;

**4) Beispiele 28 - 42**

Die Beispiele 28 bis 42 beschreiben Herstellbeispiele für Formulierungen, die zur Metallvorbehandlung geeignet sind. Dazu wurden die Zusammensetzungen aus den Beispielen unter Punkt 3) wie nachfolgend in Tabelle 5 beschrieben mit Wasser vermischt und auf Metallsubstrate aufgetragen.

Tabelle 5:

| Beispiel | Dispersion nach Beispiel | Einsatzmenge Zusammensetzung aus dem Beispiel [Gew.-%] | Wasser [Gew.-%] | Substrat |
|---|---|---|---|---|
| 28 | 7 | 30 | 70 | V+P |
| 29 | 26 | 30 | 70 | V+P |
| 30 | 4 | 30 | 70 | V+P |
| 31 | 4 | 30 | 70 | V |
| 32 | 4 | 7,5 | 92,5 | V+P |
| 33 | 4 | 1,5 | 98,5 | V+P |
| 34 | 4 | 7,5 | 98,5 | V |
| 35 | 4 | 1,5 | 92,5 | V |
| 36 | 5 | 30 | 70 | V+P |
| 37 | 5 | 30 | 70 | V |
| 38 | 21 | 30 | 70 | V+P |
| 39 | 21 | 30 | 70 | V |
| 40 | 24 | 30 | 70 | V+P |
| 41 | 24 | 30 | 70 | V |
| 42 | 10 | 30 | 70 | V+P |

Legende zur Tabelle 5 und 6:

Stahlbleche, V+P: feuerverzinkt, zinkmanganphosphatiert. Bleche der Firma Chemetall (Gardobond 26/1 S / GN D60/ OE)
V: feuerverzinkt, Bleche der Firma Chemetall (Gardobond OE)

Tabelle 6: Vergleichsbeispiele 1 bis 10

| VergleichsBeispiel | wässriges, oligomeres Siloxanol | Einsatzmenge wässriges, oligomeres Siloxanol [Gew.-%] | Wasser [Gew.-%] | Substrat |
|---|---|---|---|---|
| 1 | Silox-4 | 30 | 70 | V+P |
| 2 | Silox-1 | 30 | 70 | V+P |
| 3 | Silox-3 | 30 | 70 | V+P |
| 4 | Silox-3 | 30 | 70 | V |
| 5 | Silox-2 | 30 | 70 | V+P |
| 6 | Silox-2 | 30 | 70 | V |
| 7 | Silox-2 | 7,5 | 92,5 | V+P |
| 8 | Silox-2 | 1,5 | 98,5 | V+P |
| 9 | Silox-2 | 7,5 | 98,5 | V |
| 10 | Silox-2 | 1,5 | 92,5 | V |

Tabelle 7: Salzsprühtest an unbehandelten und behandelten Blechen (vgl. Tabelle 5, 6)

| Versuch | 48 h SS | 72 h SS | 216 h SS | 288 h SS | 576 h SS |
|---|---|---|---|---|---|
| Ohne Behandlung | 0 | 0 | - | -- | -- |
| Vergleichsbeispiel 4 | + | + | 0 | 0 | -- |
| Beispiel 39 | + | + | 0 | 0 | - |
| Beispiel 41 | + | + | 0 | 0 | 0 |
| Vergleichsbeispiel 6 | + | 0 | 0 | - | -- |
| Beispiel 4 | + | 0 | 0 | 0 | - |
| Beispiel 5 | ++ | ++ | + | 0 | 0 |

Legende der Tabelle 7 und 8:

++: sehr gute Oberfläche, nur in geringen Maßen Weißrost.
+: Oberfläche teilweise mit Weißrost bedeckt.
0: Weißrost auf der gesamten Oberfläche, noch kein Rotrost
-: geringe Mengen an Rotrost
--: schon signifikante Mengen Rotrost.

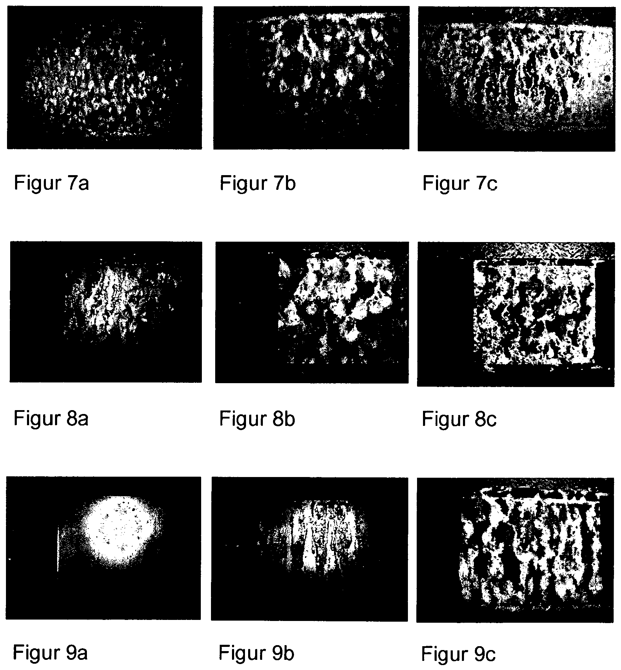

Die Abbildungen in den Figuren 7 a/b/c bis 9 a/b/c geben als Photo die Veränderungen der Blechoberflächen nach 144, 216 und 576 Stunden Salzsprühtest wieder.

Figur 7 a/b/c: Blech ohne Behandlung; Figur 7a: nach 144 Stunden Salzsprühtest; (in Anlehnung an DIN-EN-ISO 9227-2006) Figur 7b: nach 216 Stunden Salzsprühtest; Figur 7c: nach 576 Stunden Salzsprühtest;

Figur 8a/b/c: Vergleichsbeispiel 6; Figur 8a: nach 144 Stunden Salzsprühtest; Figur 8b: nach 216 Stunden Salzsprühtest; Figur 8c: nach 576 Stunden Salzsprühtest;

Figur 9a/b/c: Beispiel 5; Figur 9a: nach 144 Stunden Salzsprühtest; Figur 9b: nach 216 Stunden Salzsprühtest; Figur 9c: nach 576 Stunden Salzsprühtest;

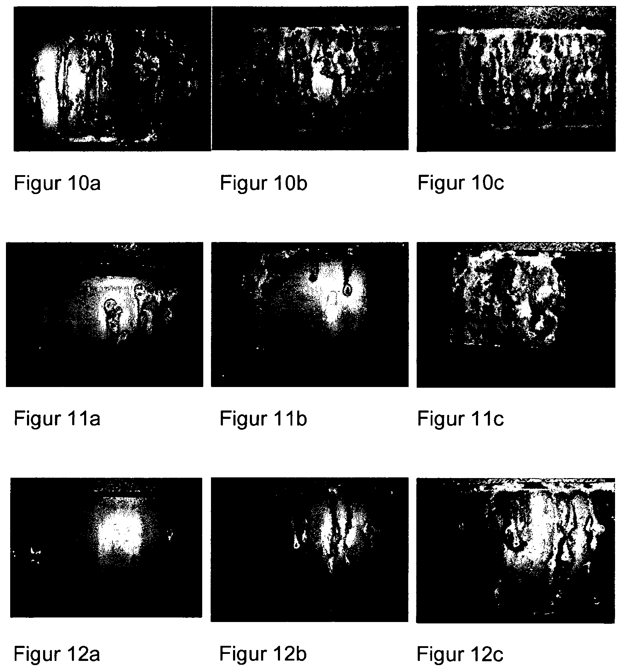

Die Abbildungen in den Figuren 10 a/b/c bis 12 a/b/c geben als Photo die Veränderungen der Blechoberflächen nach 144, 216 und 480 Stunden Salzsprühtest wieder.

Figur 10 a/b/c: Blech ohne Behandlung; Figur 10a: nach 114 Stunden Salzsprühtest; Figur 10b: nach 216 Stunden Salzsprühtest; Figur 10c: nach 576 Stunden Salzsprühtest;

Figur 11 a/b/c: Vergleichsbeispiel 2; Figur 11 a: nach 144 Stunden Salzsprühtest; Figur 11b: nach 216 Stunden Salzsprühtest; Figur 11 c: nach 480 Stunden Salzsprühtest;

Figur 12a/b/c: Beispiel 28; Figur 12a: nach 144 Stunden Salzsprühtest; Figur 12b: nach 216 Stunden Salzsprühtest; Figur 12c: nach 480 Stunden Salzsprühtest;

Tabelle 8: Salzsprühtest an unbehandeltem und behandelten Blechen

| Versuch | 144 h SS | 216 h SS | 384 h SS |
|---|---|---|---|
| Ohne Behandlung | 0 | 0 | 0 |
| Vergleichsbeispiel 3 | ++ | + | 0 |
| Vergleichsbeispiel 5 | + | 0 | 0 |
| Vergleichsbeispiel 1 | ++ | + | 0 |
| Vergleichsbeispiel 2 | + | + | 0 |
| Beispiel 38 | + | 0 | 0 |
| Beispiel 40 | Keine Veränderung | ++ | 0 |
| Beispiel 36 | ++ | + | 0 |
| Beispiel 29 | Keine Veränderung | ++ | 0 |
| Beispiel 28 | ++ | + | + |
| Beispiel 42 | + | 0 | 0 |

Legende, siehe Tabelle 7.

**Beispiel 43:** Einsatz einer Dispersion zur Veränderung der Viskosität einer Lackformulierung

Tabelle 9:

| Rohstoffe [g] | Dispersion aus (py $SiO_2$-1)und Silox-1 |
|---|---|
| Silox-1 | 200 |
| (py $SiO_2$-1) | 40 |
| Summe | 240 |

Die Rezeptbestandteile wurden in der Reihenfolge der Rezeptur unter Rühren eingewogen. Danach wurden die Ansätze mit einem Dissolver bei 2000 U/min 10 min homogenisiert. Anschließend erfolgte die Dispergierung mit dem Kinematica PT 3100 für 15 min bei 8000 U/min.

Tabelle 10:

| | Dispersion: (py $SiO_2$-1) und Silox-1 | alkalische Dispersion (py $SiO_2$-KOH | Silox-1 |
|---|---|---|---|
| pH- value | 2,8 | 9,6 | 3 |
| (py $SiO_2$-1) Gew. [%] | 16,6 | 20 | - |
| $SiO_2$- Gew. [%] | 25 | 20 | 10 |
| | Dispersion: (py $SiO_2$-1) und Silox-1 | alkalische Dispersion (py $SiO_2$-KOH) | Silox-1 |
| Solid - Gew. [%] | 25 | 20 | - |

Als alkalische Dispersion (py SiO$_2$-KOH wurde eine mit KOH stabilisierte Dispersion hydrophiler, pyrogener Kieselsäure eingesetzt. Die bei einer Schergeschwindigkeit von 100 s$^{-1}$ nach DIN EN ISO 3219 bestimmte Viskosität lag bei kleiner gleich 300 mPa s. Tabelle 11 zeigt Lacke, die unter Verwendung in Tabelle 10 dargestellten Zusammensetzung hergestellt wurden.

Tabelle 11:

| AL | 0 | 1 | 4 | 6 |
|---|---|---|---|---|
| Bayhydrol A 145 | 62,54 | 62,54 | 62,54 | 62,54 |
| Surfynol 104 BC | 1 | 1 | 1 | 1 |
| Dispersion (py SiO$_2$-1) + Silox-1 | | 8 | | |
| alkalische Dispersion (py SiO$_2$-KOH) | | | 10 | |
| Silox-1 | | | | 8 |
| Baysilone 3468:3466, 3:7, 10 % in BG | 0,99 | 0,99 | 0,99 | 0,99 |
| Demin. H$_2$O | 13,9 | 5,9 | 3,9 | 5,9 |
| Dipropylenglykol | 2 | 2 | 2 | 2 |
| Bayhydur VP LS 2319 | 19,57 | 19,57 | 19,57 | 19,57 |
| Summe | 100 | 100 | 100 | 100 |

Zum Auftragen per Spritzten wird der Lack durch Wasserzugabe in der Viskosität eingestellt ISO 2431. Folgende Mengen an Wasser wurden bei den einzelnen Versuchen zugegeben:

Tabelle 12:

| AL | 0 | 1 | 4 | 6 |
|---|---|---|---|---|
| | Nullprobe | Silox-1 + (py SiO$_2$-1 Probe 1 | alkalische Dispersion (py SiO$_2$-KOH) | Silox-1 |
| Verdünnung H$_2$O in % auf 26 s DIN 4mm: | 4,5 | 11 | 8,5 | 6 |

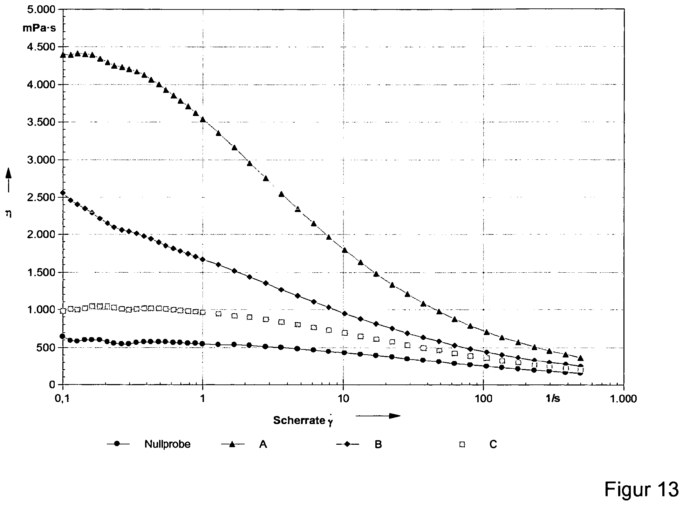

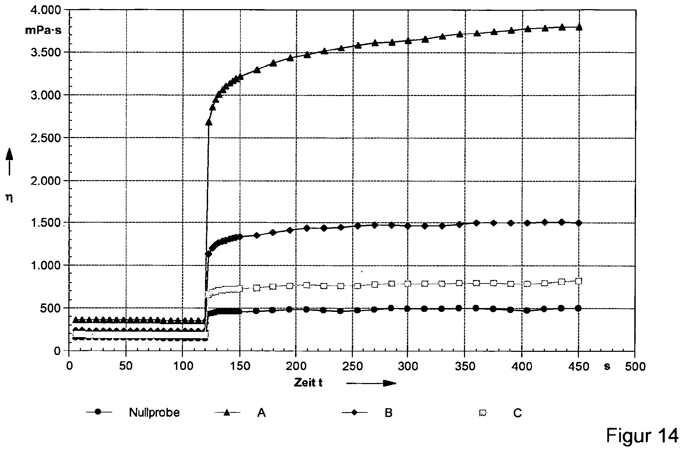

Die Figuren 13 und 14 zeigen das thixotrope Verhalten der Dispersion. Das Beispiel (A) zeigt deutlich ausgeprägtere Thixotropie als B und C.
Nullprobe ist der Lack ohne Rheologieadditive: A = Beispiel; B = (py SiO$_2$-1) Dispersion; C = Silox-1

Tabelle 13:

| AL | 0 | 1 | 4 | 6 |
|---|---|---|---|---|
| | Nullprobe | Silox-1+ (py SiO$_2$-1) | alkalische Dispersion (py SiO$_2$-KOH) | Silox-1 |
| Haze: | 21 | 10,8 | 178 | 11,3 |
| Glanz bei 20°: | 82,0 | 82,6 | 69,7 | 82,5 |
| Schwarzzahl My: | 282 | 273 | 270 | 279 |
| Long wave: | 0,5 | 0,3 | 12 | 0,6 |
| Short wave: | 1,9 | 0,9 | 25 | 2 |
| Schichtdicke: | 52 $\mu$m | 60 $\mu$m | 52 $\mu$m | 56 $\mu$m |

Tabelle 14: $\dot{\gamma}$ (Scherrate)

| Dispergierung | Auflackgemisch mit Flügelrührer bei 2000 U/min 10min mischen, Rezeptbestandteile werden unter Rühren hinzugegeben, Härterzugabe mit Flügelrührer bei 2000 U/min 10min homogenisieren. |
|---|---|
| Viskositätsmessung der Dispersionen und Lacke | - Lacke: Fließkurven und Sprungversuche nach Zugabe des Härters<br><br>- Fließkurve: Vorscheren $\dot{\gamma}$ = 50 s-1 (30s) Ruhen (600s)<br>  Messung $\dot{\gamma}$ = 0,1 s-1 bis 500 s-1 (150 s)<br>- Sprungversuch: 120 s bei $\dot{\gamma}$ = 500 s-1<br>300 s bei $\dot{\gamma}$ = 0,5 s-1 |
| Applikation | Spritzapplikation auf schwarz lackierte Bleche (DT36) mit einer Handpistole 1,4 mm. 1 Kreuzgang bei 3 bar Druck |
| Härtung | 30 min Ablüften bei RT (22 °C, 55 % rel. Luftfeuchte) und 30 min bei 60 °C im Trockenschrank, Prüfung der Lacke nach einer Woche Konditionierung bei RT. |
| 20°-Reflektometerwert / Haze | Beurteilung erfolgt an Lackfilmen, die auf schwarze Bleche appliziert sind, mit einem Reflektometer der Fa. Byk Gardner z. B. DIN 67530 |
| Schwarzzahl My (Beurteilung der Transparenz) | Bestimmung erfolgt an Lackfilmen, die auf schwarz gespritzte Bleche appliziert sind, mit einem Densitometer D19C der Fa. Gretag Macbeth. Die Schwarzzahl My ist der gemessene Wert mit hundert multipliziert. |
| Wave scan (Verlauf) | Der Verlauf wird mittels eines Wave-scan plus Gerätes der Fa. Byk-Gardner beurteilt |

**Patentansprüche**

1. Verfahren zur Herstellung einer Zusammensetzung enthaltend mit oligomeren Siloxanolen funktionalisierte pyrogene Metalloxide, indem

   (i) mindestens ein wässriges, im Wesentlichen vollständig hydrolysiertes, oligomeres und organofunktionelles Siloxanol oder ein Gemisch von oligomeren, organofunktionellen Siloxanolen, das im Wesentlichen frei von organischen Lösemitteln ist,
   in denen jedes Silizium-Atom des Siloxanols mindestens eine funktionelle Gruppe trägt, und

   - die funktionelle Gruppe gleich oder verschieden ist und ausgewählt ist

   a) zu 50 bis 100 % aus den organofunktionellen Gruppen Aminoalkyl-, N-Alkylaminoalkyl-, Diaminoalkyl-, Triaminoalkyl-, bis-N-Aminoalkyl-, bis-N-Aminoalkylsilyl-, tris-N-Aminoalkyl-, tris-N-Aminoalkylsilyl-, quartäre-Aminoalkyl-, Mercaptoalkyl-, Methacryl-, Methacryloxyalkyl-, Hydroxyalkyl-, Epoxyalkyl-, Glycidoxyalkyl-, hydrolysierte Glycidoxyalkyl-, Polysulfan-, Disulfan-, Thioether-, Polyether-, Vinyl-, Alkyl-, Alkenyl-, Alkinyl-, Aryl-, Alkylaryl-, Halogenalkyl-, Ureido-, Sulfanalkyl-, Cyanat- und/oder Isocyanat-Gruppen, wobei die organofunktionellen Gruppen linear, verzweigt und/oder cyclisch sind, und
   b) zu 0 bis 50 % der Hydroxy-Gruppe,

   und die verbleibenden freien Valenzen der Silizium-Atome in den oligomeren Siloxanolen durch Hydroxygruppen gesättigt sind,
   mit

   (ii) mindestens einem pyrogenen Metalloxid ausgewählt aus der Gruppe Kieselsäure, Metalloxid modifizierte Kieselsäure und einem Metalloxid enthaltend mindestens Silizium, Aluminium, Zirkon, Titan, Eisen, Cer, Indium, Samarium, Zinn, Zink, Antimon, Arsen, Tantal, Rhodium, Ruthenium, Cobalt, Nickel, Kupfer, Silber, Germanium und/oder entsprechenden Mischoxiden oder damit modifizierten Metalloxiden intensiv gemischt wird, wobei das pyrogene Metalloxid als Metalloxidpulver zu den wässrigen, oligomeren Siloxanolen hinzugefügt wird und unter hohem Energieeintrag durch hohe Rühr- und/oder Mischgeschwindigkeiten mit den oligomeren Siloxanolen dispergiert wird.

**2.** Verfahren nach Anspruch 1,
**dadurch gekennzeichnet,**
**dass** das pyrogene Metalloxid ausgewählt ist aus $SiO_2$ $Al_2O_3$, $TiO_2$, $HfO_2$, $Y_2O_3$, $ZrO_2$ $Fe_2O_3$, $Nb_2O_5$, $V_2O_5$, $WO_3$, $SnO_2$ $GeO_2$ $B_2O_3$, $In_2O_3$, ZnO, CaO, Manganoxiden, Bleioxiden, MgO, BaO, SrO, entsprechenden Mischoxiden und damit modifizierten Metalloxiden.

**3.** Verfahren nach Anspruch 1 oder 2,
**dadurch gekennzeichnet,**
**dass** 0,001 bis 60 Gew.-% pyrogenes Metalloxid in Bezug auf die Gesamtzusammensetzung dispergiert werden.

**4.** Verfahren nach einem der Ansprüche 1 bis 3,
**dadurch gekennzeichnet,**
**dass** das oligomere Siloxanol einen Oligomerisierungsgrad von mindestens vier besitzt, insbesondere ein Oligomerisierungsgrad zwischen 4 bis 100000.

**5.** Verfahren nach einem der Ansprüche 1 bis 4,
**dadurch gekennzeichnet,**
**dass** die Primärteilchen des pyrogenen Metalloxids eine mittlere Partikelgröße ($d_{50}$) zwischen 2 bis 100 nm aufweisen.

**6.** Verfahren nach einem der Ansprüche 1 bis 5,
**dadurch gekennzeichnet,**
**dass** das Dispergieren bei Rührgeschwindigkeiten oberhalb 1000 Umdrehungen pro Minute erfolgt.

**7.** Verfahren nach einem der Ansprüche 1 bis 6,
**dadurch gekennzeichnet,**
**dass** die organofunktionelle Gruppe unabhängig von einander mindestens eine der folgenden Gruppen umfasst

a) Aminoalkyl-Gruppe der Formeln I und/oder II mit

$$R^1{}_{h*}NH_{(2-h*)}[(CH_2)_h(NH)]_j ((CH_2)_l(NH)]_n -(CH_2)_k- \qquad (I)$$

worin $0 \leq h \leq 6$; $h^* = 0$, 1 oder 2, $j = 0$, 1 oder 2; $0 \leq l \leq 6$; $n = 0$, 1 oder 2; $0 \leq k \leq 6$ und $R^1$ einem Benzyl-, Aryl-, Vinyl-, Formyl-Rest und/oder einem linearen, verzweigten und/oder cyclischen Alkyl-Rest mit 1 bis 8 C-Atomen entsprechen,

$$[NH_2(CH_2)_m]_2N(CH_2)_p- \qquad (II),$$

worin $0 \leq m \leq 6$ und $0 \leq p \leq 6$ sind,
b) Alkyl-Gruppe ausgewählt aus n-Propyl-, iso-Propyl-, Ethyl-, Methyl-, n-Octyl, Isobutyl-, Octyl-, Cyclohexyl- und/oder Hexadecyl-Gruppen,
c) Epoxy- und/oder Hydroxyalkyl-Gruppe ausgewählt aus Glycidoxyalkyl-, Epoxyalkyl- und/oder Epoxycycloalkyl-Gruppe, und/oder
d) Halogenalkyl-Gruppe der Formel (IV)

$$R^2-Y_{m*}-(CH_2)_s- \qquad (IV),$$

wobei $R^2$ einem mono-, oligo- oder perfluorierten Alkyl-Rest mit 1 bis 9 C-Atomen oder einem mono-, oligo- oder perfluorierten Aryl-Rest, und wobei ferner Y einem $CH_2$-, O-, Aryl- oder S-Rest entspricht und $m^* = 0$ oder 1 und $s = 0$ oder 2 ist.

**8.** Verfahren nach einem der Ansprüche 1 bis 7,
**dadurch gekennzeichnet,**
**dass** die organofunktionellen, oligomeren Siloxanole mindestens zwei der folgenden Strukturelemente ausgewählt aus $-O-Si(OH)(R)-$, $-O-Si(OH)_2(R)$, $(-O-)_2(HO)SiR$, $(-O-)_3SiR$, $(-O-)_3Si(OH)$, $(-O-)_2Si(OH)_2$, $(-O-)_4Si$, $-O-Si(OH)_2-$, $-O-Si(R)_2-$, $-O-Si(OH)(R)_2$ und/oder $(-O-)_2Si(R$ aufweisen, vorzugsweise mindestens $-O-Si(OH)(R)-$, $-O-Si(OH)_2(R)$, und/oder $(-O-)_2(HO)SiR$, und R in den Strukturelementen gleich oder verschieden ist und R der organofunktionellen Gruppe, insbesondere gemäß der Definition in den Ansprüchen 1 oder 8 entspricht.

9. Verfahren nach einem der Ansprüche 1 bis 8,
**dadurch gekennzeichnet,**
**dass** eine Viskosität zwischen 5 bis 8000 mPa·s, insbesondere zwischen 10 bis 4000 mPa·s, vorzugsweise zwischen 15 bis 1500 mPa·s oder besonders bevorzugt zwischen 20 bis 500 mPa·s eingestellt wird.

10. Verfahren nach einem der Ansprüche 1 bis 9,
**dadurch gekennzeichnet,**
**dass** das Verfahren im wesentlichen ohne Gegenwart organischer Lösemittel oder organischer Polymere durchgeführt wird.

**Claims**

1. Process for preparing a composition comprising fumed metal oxides functionalized with oligomeric siloxanols, by intensively mixing

   (i) at least one aqueous, substantially completely hydrolyzed, oligomeric, and organofunctional siloxanol or a mixture of oligomeric, organofunctional siloxanols which is substantially free from organic solvents,
   in which each silicon atom of the siloxanol carries at least one functional group, and

   - the functional group is identical or different and is selected

   a) to an extent of 50% to 100% from the organofunctional groups aminoalkyl, N-alkylaminoalkyl, diaminoalkyl, triaminoalkyl, bis-N-aminoalkyl, bis-N-aminoalkylsilyl, tris-N-aminoalkyl, tris-N-aminoalkylsilyl, quaternary-aminoalkyl, mercaptoalkyl, methacryloyl, methacryloyloxyalkyl, hydroxyalkyl, epoxyalkyl, glycidyloxyalkyl, hydrolyzed glycidyloxyalkyl, polysulfane, disulfane, thioether, polyether, vinyl, alkyl, alkenyl, alkynyl, aryl, alkylaryl, haloalkyl, ureido, sulfanealkyl, cyanate and/or isocyanate groups, the organofunctional groups being linear, branched and/or cyclic, and
   b) to an extent of 0% to 50% the hydroxyl group,

   and the remaining free valences of the silicon atoms in the oligomeric siloxanols are satisfied by hydroxyl groups,
   with

   (ii) at least one fumed metal oxide selected from the group of silica, metal oxide modified silica, and a metal oxide comprising at least silicon, aluminum, zirconium, titanium, iron, cerium, indium, samarium, tin, zinc, antimony, arsenic, tantalum, rhodium, ruthenium, cobalt, nickel, copper, silver, germanium and/or corresponding mixed oxides, or metal oxides modified therewith, wherein the fumed metal oxide is added as metal oxide powder to the aqueous, oligomeric siloxanols and is dispersed with the oligomeric siloxanols with high input of energy by means of high stirring and/or mixing speeds.

2. Process according to Claim 1,
**characterized,**
**in that** the fumed metal oxide is selected from $SiO_2$, $Al_2O_3$, $TiO_2$, $HfO_2$, $Y_2O_3$, $ZrO_2$, $Fe_2O_3$, $Nb_2O_5$, $V_2O_5$, $WO_3$, $SnO_2$, $GeO_2$, $B_2O_3$, $In_2O_3$, ZnO, CaO, manganese oxides, lead oxides, MgO, BaO, SrO, corresponding mixed oxides, and metal oxides modified therewith.

3. Process according to Claim 1 or 2,
**characterized,**
**in that** 0.001% to 60% by weight of fumed metal oxide is dispersed, relative to the overall composition.

4. Process according to any of Claims 1 to 3,
**characterized,**
**in that** the oligomeric siloxanol possesses a degree of oligomerization of at least 4, more particularly a degree of oligomerization of between 4 to 100 000.

**5.** Process according to any of Claims 1 to 4,
**characterized,**
**in that** the primary particles of the fumed metal oxide have an average particle size ($d_{50}$) of between 2 to 100 nm.

**6.** Process according to any of Claims 1 to 5,
**characterized,**
**in that** the dispersing takes place at stirring speeds of more than 1000 revolutions per minute.

**7.** Process according to any of Claims 1 to 6,
**characterized,**
**in that** the organofunctional group independently of one another comprises at least one of the following groups

a) aminoalkyl group of the formulae I and/or II with

$$R^1{}_h{}^* NH_{(2-h^*)} [(CH_2)_h(NH)]_j [(CH_2)_l(NH)]\text{-}(CH_2)_k\text{-} \qquad (I)$$

in which $0 \leq h \leq 6$; $h^* = 0$, 1 or 2; $j = 0$, 1 or 2; $0 \leq 1 \leq 6$; $n = 0$, 1 or 2;
$0 \leq k \leq 6$ and $R^1$ is a benzyl, aryl, vinyl or formyl radical and/or a linear, branched and/or cyclic alkyl radical having 1 to 8 C atoms,

$$[NH_2(CH_2)_m]_2 N(CH_2)_p\text{-} \qquad (II),$$

in which $0 \leq m \leq 6$ and $0 \leq p\ 6$,
b) alkyl group selected from n-propyl, isopropyl, ethyl, methyl, n-octyl, isobutyl, octyl, cyclohexyl and/or hexadecyl groups,
c) epoxy- and/or hydroxyalkyl group selected from glycidyloxyalkyl, epoxyalkyl and/or epoxycycloalkyl group, and/or
d) haloalkyl group of the formula (IV)

$$R^2\text{-}Y_{m^*}\text{-}(CH_2)_s\text{-} \qquad (IV),$$

where $R^2$ is a mono-, oligo- or perfluorinated alkyl radical having 1 to 9 C atoms or a mono-, oligo-or perfluorinated aryl radical, and where, further, Y is a $CH_2$, 0, aryl or S radical and $m^* = 0$ or 1, and $s = 0$ or 2.

**8.** Process according to any of Claims 1 to 7,
**characterized,**
**in that** the organofunctional, oligomeric siloxanols have at least two of the following structural elements selected from -O-Si (OH) (R) -, -O-Si(OH)$_2$(R), (-O-)$_2$(HO)SiR, (-O-)$_3$SiR, (-O-)$_3$Si(OH), (-O-)$_2$Si(OH)$_2$, (-O-)$_4$Si, -O-Si(OH)$_2$-, -O-Si(R)$_2$-, -O-Si(OH)(R)$_2$ and/or (-O-)$_2$Si(R)$_2$, preferably at least -O-Si(OH)(R)-, -O-Si(OH)$_2$(R), and/or (-O-)$_2$(HO)SiR, and R in the structural elements is identical or different and R is the organofunctional group, more particularly in accordance with the definition in Claims 1 or 8.

**9.** Process according to any of Claims 1 to 8,
**characterized,**
**in that** a viscosity of between 5 to 8000 mPa·s, more particularly between 10 to 4000 mPa·s, preferably between 15 to 1500 mPa·s or with particular preference between 20 to 500 mPa·s is set.

**10.** Process according to any of Claims 1 to 9,
**characterized,**
**in that** the process is carried out substantially without presence of organic solvents or organic polymers.

**Revendications**

**1.** Procédé pour la préparation d'une composition contenant des oxydes métalliques pyrogènes fonctionnalisés par des siloxanols oligomères, dans lequel

(i) au moins un siloxanol aqueux, essentiellement complètement hydrolysé, oligomère et organofonctionnel ou un mélange de siloxanols oligomères, organofonctionnels, qui est essentiellement exempt de solvant organique, dans le(s)quel(s) chaque atome de silicium du siloxanol porte au moins un groupe fonctionnel et

- le groupe fonctionnel est identique ou différent et choisi

a) à raison de 50 à 100% parmi les groupes organofonctionnels aminoalkyle, N-alkylaminoalkyle, diaminoalkyle, triaminoalkyle, bis-N-aminoalkyle, bis-N-aminoalkylsilyle, tris-N-aminoalkyle, tris-N-aminoalkylsilyle, aminoalkyle quaternaire, mercaptoalkyle, méthacryle, méthacryloxyalkyle, hydroxyalkyle, époxyalkyle, glycidoxyalkyle, glycidoxyalkyle hydrolysé, polysulfane, disulfane, thioéther, polyéther, vinyle, alkyle, alcényle, alcynyle, aryle, alkylaryle, halogénoalkyle, uréido, sulfanalkyle, cyanate et/ou isocyanate, les groupes organofonctionnels étant linéaires, ramifiés et/ou cycliques, et
b) à raison de 0 à 50% le groupe hydroxy

et les valences libres qui restent des atomes de silicium dans les siloxanols oligomères sont saturées par des groupes hydroxy

est mélangé intensivement avec
(ii) au moins un oxyde métallique pyrogène choisi dans le groupe formé par la silice, la silice modifiée par un oxyde métallique et un oxyde métallique contenant au moins du silicium, de l'aluminium, du zirconium, du titane, du fer, du cérium, de l'indium, du samarium, de l'étain, du zinc, de l'antimoine, de l'arsenic, du tantale, du rhodium, du ruthénium, du cobalt, du nickel, du cuivre, de l'argent, du germanium et/ou des oxydes mixtes correspondants ou des oxydes métalliques modifiés par ceux-ci

l'oxyde métallique pyrogène étant ajouté sous forme de poudre d'oxyde métallique aux siloxanols oligomères aqueux et dispersé sous une introduction élevée d'énergie par des vitesses d'agitation et/ou de mélange élevées avec les siloxanols oligomères.

2. Procédé selon la revendication 1, **caractérisé en ce que** l'oxyde métallique pyrogène est choisi parmi le $SiO_2$, l'$Al_2O_3$, le $TiO_2$, l'$HfO_2$, l'$Y_2O_3$, le $ZrO_2$, le $Fe_2O_3$, le $Nb_2O_5$, le $V_2O_5$, le $WO_3$, le $SnO_2$, le $GeO_2$, le $B_2O_3$, l'$In_2O_3$, le ZnO, le CaO, les oxydes de manganèse, les oxydes de plomb, le MgO, le BaO, le SrO, les oxydes mixtes correspondants et les oxydes métalliques modifiés par ceux-ci.

3. Procédé selon la revendication 1 ou 2, **caractérisé en ce qu'**on disperse 0,001 à 60% en poids d'oxyde métallique pyrogène par rapport à la composition totale.

4. Procédé selon l'une quelconque des revendications 1 à 3, **caractérisé en ce que** le siloxanol oligomère présente un degré d'oligomérisation d'au moins quatre, en particulier un degré d'oligomérisation entre 4 à 100.000.

5. Procédé selon l'une quelconque des revendications 1 à 4, **caractérisé en ce que** les particules primaires de l'oxyde métallique pyrogène présentent une grosseur moyenne de particule ($d_{50}$) entre 2 et 100 nm.

6. Procédé selon l'une quelconque des revendications 1 à 5, **caractérisé en ce que** la dispersion a lieu à des vitesses d'agitation supérieures à 1000 tours par minute.

7. Procédé selon l'une quelconque des revendications 1 à 6, **caractérisé en ce que** le groupe organofonctionnel comprend, indépendamment, au moins un des groupes suivants

a) un groupe aminoalkyle des formules I et/ou II

$$R^1{}_{h}{}^*NH_{(2-h^*)}[(CH_2)_h(NH)]_j[(CH2)_l(NH)]_n\text{-}(CH_2)_k\text{-} \qquad (I)$$

dans laquelle $0 \leq h \leq 6$ ; $h^* = 0$, 1 ou 2 ; $j = 0$, 1 ou 2 ; $0 \leq 1 \leq 6$ ; $n = 0$, 1 ou 2 ; $0 \leq k \leq 6$ et $R^1$ représente un radical benzyle, aryle, vinyle, formyle et/ou un radical alkyle linéaire, ramifié et/ou cyclique comprenant 1 à 8 atomes de carbone,

$$[NH_2(CH_2)_m]_2N(CH_2)_p\text{-} \qquad (II),$$

dans laquelle $0 \leq m \leq 6$ et $0 \leq p \leq 6$,

b) un groupe alkyle choisi parmi les groupes n-propyle, iso-propyle, éthyle, méthyle, n-octyle, isobutyle, octyle, cyclohexyle et/ou hexadécyle,

c) un groupe époxyalkyle et/ou hydroxyalkyle, choisi parmi un groupe glycidoxyalkyle, époxyalkyle et/ou époxycycloalkyle et/ou

d) un groupe halogénoalkyle de formule (IV)

$$R^2\text{-}Y_{m*}\text{-}(CH_2)_s\text{-} \qquad \text{(IV)},$$

$R^2$ représentant un radical alkyle monofluoré, oligofluoré ou perfluoré comprenant 1 à 9 atomes de carbone ou un radical aryle monofluoré, oligofluoré ou perfluoré et Y correspondant en outre à un radical $CH_2$, 0, aryle ou S et $m* = 0$ ou 1 et $s = 0$ ou 2.

8. Procédé selon l'une quelconque des revendications 1 à 7, **caractérisé en ce que** les siloxanols organofonctionnels, oligomères présentent deux des éléments structuraux suivants, choisis parmi -O-Si(OH)(R)-, -O-Si(OH)$_2$(R), (-O-)$_2$(HO)SiR, (-O-)$_3$SiR, (-O-)$_3$Si(OH), (-O-)$_2$Si(OH)$_2$, (-O-)$_4$Si, -O-Si(OH)$_2$-, -0-Si(R)$_2$-, -O-Si(OH)(R)$_2$ et/ou (-O-)$_2$Si(R)$_2$, de préférence au moins -O-Si(OH)(R)-, -O-Si(OH)$_2$(R) et/ou (-O-)$_2$(HO)SiR et R dans les éléments structuraux est identique ou différent et R correspond au groupe organofonctionnel, en particulier selon la définition dans les revendications 1 ou 8.

9. Procédé selon l'une quelconque des revendications 1 à 8, **caractérisé en ce qu'**une viscosité entre 5 à 8000 mPa.s, en particulier entre 10 à 4000 mPa.s, de préférence entre 15 à 1500 mPa.s ou de manière particulièrement préférée entre 20 à 500 mPa.s est réglée.

10. Procédé selon l'une quelconque des revendications 1 à 9, **caractérisé en ce que** le procédé est essentiellement réalisé sans la présence de solvants organiques ou de polymères organiques.

Figur 1

Figur 2

Figur 3

Figur 4

**Particle Size Distribution (Volume)**

Figur 5

Figur 6

Figur 7a          Figur 7b          Figur 7c

Figur 8a          Figur 8b          Figur 8c

Figur 9a          Figur 9b          Figur 9c

Figur 10a          Figur 10b          Figur 10c

Figur 11a          Figur 11b          Figur 11c

Figur 12a          Figur 12b          Figur 12c

Figur 13

Figur 14

# EP 2 539 409 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1773958 A1
- US 20080058489 A
- DE 19814605 A1
- EP 1288245 A2
- EP 1216956 A
- EP 850876 A
- US 7241336 B
- EP 1284277 A
- EP 1236773 A
- US 6627173 B
- EP 1083146 A
- EP 1048617 A
- EP 0995718 A
- EP 0850876 A
- EP 0585544 A
- WO 2006037380 A1
- DE 102004049
- EP 0675128 A
- EP 0953591 A
- EP 0716128 A
- EP 0716127 A
- EP 0832911 A
- EP 1031593 A
- WO 2007085320 A
- WO 2006010388 A1
- WO 2007085339 A
- WO 2009030538 A
- WO 2006037380 A